# EUROPÄISCHE PATENTSCHRIFT

(11) **EP 3 682 371 B1**
(45) Veröffentlichungstag und Bekanntmachung des Hinweises auf die Patenterteilung: **07.01.2026**
(21) Anmeldenummer: 18769038.3
(22) Anmeldetag: 21.08.2018
(51) Int. Cl.: G06V 10/74, G06V 10/50

(54) **VERFAHREN UND VORRICHTUNG ZUM BEWERTEN VON BILDERN, BETRIEBSASSISTENZVERFAHREN UND BETRIEBSVORRICHTUNG**
METHOD AND DEVICE FOR EVALUATING IMAGES, OPERATIONAL ASSISTANCE METHOD AND OPERATING DEVICE
PROCÉDÉ ET DISPOSITIF D'ÉVALUATION D'IMAGES, PROCÉDÉ DE SUPPORT DE FONCTIONNEMENT ET DISPOSITIF DE FONCTIONNEMENT

(30) Priorität: 12.09.2017 DE 102017216065
(43) Veröffentlichungstag der Anmeldung: 22.07.2020
(73) Patentinhaber: Robert Bosch GmbH, 70442 Stuttgart (DE)
(72) Erfinder: ORTIZ CUESTA, Fernando, 30449 Hannover (DE); ZENDER, Arne, 31162 Bad Salzdetfurth (DE); SIMON, Stephan, 31079 Sibbesse (DE)
(86) Internationale Anmeldenummer: PCT/EP2018/072504
(87) Internationale Veröffentlichungsnummer: WO 2019/052786

(56) Entgegenhaltungen:
- WO-A1-2012/137214
- WO-A1-2015/110331
- DE-A1- 102012 023 060
- DE-A1- 102016 219 368
- "Serious Games", vol. 2383, 1 January 2002, SPRINGER INTERNATIONAL PUBLISHING, Cham, ISBN: 978-3-642-15171-2, ISSN: 0302-9743, article GREGORY COX ET AL: "A Linear Image-Pair Model and the Associated Hypothesis Test for Matching", pages: 61 - 69, XP055536278, DOI: 10.1007/3-540-45479-9_7

## Beschreibung

### Stand der Technik

Die vorliegende Erfindung betrifft ein Verfahren und eine Vorrichtung zum Bewerten von Bildern und insbesondere von Korrespondenzhypothesen von Bildern, ein Betriebsassistenzverfahren und insbesondere ein Fahrassistenzverfahren sowie eine Betriebsvorrichtung und insbesondere ein Fahrzeug. Die vorliegende Erfindung betrifft des Weiteren ein Computerprogramm und ein maschinenlesbares Speichermedium.

In vielen technischen Bereichen wird zur Steuerung von Vorrichtungen und Prozessen Bildverarbeitung eingesetzt, zum Beispiel auch im Bereich der Automobilindustrie bei so genannten Fahrerassistenzsystemen. In diesem Zusammenhang werden z.B. Bilder erfasst und einem Steuerprozess zu Grunde gelegt. Dazu müssen die Bilder bewertet werden. Bei der Bildbewertung werden häufig so genannte Korrespondenzen erzeugt und der Bewertung zu Grunde gelegt. Derartige Korrespondenzen beschreiben pixelweise und in zeitlicher und/oder räumlicher Richtung Zuordnungen zwischen Koordinaten in einem ersten Bild und Koordinaten in einem zweiten Bild. Bei einer zeitlichen Beziehung kann es sich um aufeinanderfolgend aufgenommene Bilder handeln, bei einer räumlichen Beziehung um räumlich getrennte Bilder, die auch gleichzeitig aufgenommen sein können, zum Beispiel bei der Stereovision. Bei der Ableitung von Korrespondenzen werden zunächst Korrespondenzhypothesen gebildet. Die Korrespondenzhypothesen müssen verifiziert oder falsifiziert werden. Dieser Vorgang ist insbesondere bei hochauflösenden Bildern speicher-, rechen- und/oder zeitintensiv.

Die Schrift DE 10 2012 023 060 A1 offenbart ein Verfahren zum Detektieren eines beweglichen Objekts mithilfe eines Histogramms anhand von Bildern einer Kamera und Kamerasystem für ein Kraftfahrzeug.

Das Dokument WO 2015/110331 A1 offenbart ein Verfahren zur Erkennung einer Bewegungsbahn mindestens eines bewegten Objektes innerhalb eines Erfassungsbereiches, wobei dieser zunächst bildgebend erfasst wird. Hierbei wird ein erstes Erfassungsbild erzeugt, dass den Erfassungsbereich zu einem ersten Erfassungszeitpunkt wiedergibt. Um einen Verzögerungszeitraum später wird ein zweites Erfassungsbild erzeugt, dass den Erfassungsbereich zu einem entsprechend späteren Erfassungszeitpunkt zeigt. Anschließend werden Korrespondenzen von Bildbereichen der Erfassungsbilder bestimmt und ausgewertet.

Die vorliegende Erfindung löst gegenüber dem Stand die Technik die Aufgabe, die Korrespondenzbildung zu beschleunigen beziehungsweise zu verbessern, wobei die Anzahl der Speicherzugriffe, der Additionen und/oder der Multiplikationen zur schnelleren Durchführung des Verfahren reduziert werden soll.

### Offenbarung der Erfindung

Die vorstehende Aufgabe wird erfindungsgemäß entsprechend der unabhängigen Ansprüche 1 und 8 bis 10 gelöst.

Das erfindungsgemäße computer-implementierte Verfahren zur Bewertung von Bildern mit den Merkmalen des Anspruchs 1 weist demgegenüber den Vorteil auf, dass mit vergleichsweise geringem Aufwand Korrespondenzhypothesen zu einem Paar von Bildern mit hoher Zuverlässigkeit verifiziert, also bestätigt, oder verworfen werden können. Dies wird erfindungsgemäß mit den Merkmalen des Anspruchs 1 dadurch erreicht, dass ein Verfahren zur Bewertung von Bildern und insbesondere zum Bewerten von Korrespondenzhypothesen von Bildern geschaffen wird, welches die Schritte aufweist:
(i) Bereitstellen von Korrespondenzhypothesen zwischen jeweils als korrespondierende Bildmatrix gegebenen ersten und zweiten Bildern als Elemente in einer korrespondierenden Hypothesenmatrix,
(ii) Bewerten der Hypothesenmatrix und bedingtes Verifizieren der Korrespondenzhypothesen und
(iii) Bereitstellen verifizierter Bildkorrespondenzhypothesen als Bildkorrespondenzen in einer Korrespondenzmatrix als Bewertungsergebnis.

Das Bewerten der Hypothesenmatrix erfolgt erfindungsgemäß, indem für jedes Element als Referenzelement der Hypothesenmatrix in einer Umgebung des jeweiligen Elements für mindestens eine Komponente der Korrespondenzhypothesen ein Histogramm bezüglich der Werte der Komponenten gebildet und bewertet wird. Durch diese Maßnahmen wird erfindungsgemäß erreicht, dass Hypothesen zu Elementen oder Pixeln der zu Grunde liegenden Bilder über ihre Umgebung im Bild oder in der Matrix der Korrespondenzhypothesen und folglich mit höherer Zuverlässigkeit bewertet und somit verifiziert oder falsifiziert werden können.

Erfindungsgemäß wird dabei der Umstand ausgenutzt, dass eine korrekte Korrespondenz im Hypothesenbild von Korrespondenzen in der Nachbarschaft bestätigt werden, weil sie in ihrem Wert, also zum Beispiel hinsichtlich Richtung und Länge ähnlich sind, während falsche Korrespondenzen diese Ähnlichkeit nicht aufweisen. Durch das erfindungsgemäße Vorgehen wird eine zuverlässige und effiziente Bewertung und Trennung der korrekten und der falschen Korrespondenzen bewirkt.

In diesem Zusammenhang bedeutet "bedingtes Verifizieren" im weiteren Sinne, dass unter Überprüfung einer oder mehrerer vorgegebener Bedingungen erfindungsgemäß entschieden wird, ob eine jeweilige Korrespondenzhypothese bestätigt und beibehalten, also im engeren Sinne verifiziert, oder aber abgelehnt und verworfen, also falsifiziert, wird.

Die vorliegende Erfindung ist anwendbar im Zusammenhang mit jeglicher Form von Kameras, Überwachungskameras und/oder Messtechnikkameras, zum Beispiel - aber nicht nur - an oder in Fahrzeugen im Allgemeinen, insbesondere im Zusammenhang mit Kraftfahrzeugen. Mit umfasst sind dabei auch Anwendungen der Erfindung im Zusammenhang mit Fernsehkameras, Consumerkameras, Drohnenkameras, Mensch-Maschine-Interaktionskameras usw.

Die Unteransprüche zeigen bevorzugte Weiterbildungen der Erfindung.

Im Sinne der vorliegenden Erfindung wird die Gesamtheit der Korrespondenzhypothesen auch als Hypothesenbild oder Hypothesenmatrix aufgefasst, deren einzelne Bestandteile werden auch als Elemente oder Pixel bezeichnet. Die einzelnen Korrespondenzhypothesen können eine oder auch mehre skalare Komponenten aufweisen, zum Beispiel Werte für verschiedene Bewegungsrichtungen u, v im Hypothesenbild und/oder in einer Projektionsebene im zu Grunde liegenden Raum. Sie können somit vektorwertig sein. Ferner können die Korrespondenzhypothesen auf dem Konzept des optischen Flusses, auch als OF bezeichnet, beruhen und/oder eine Stereodisparität wiedergeben, dies ist jedoch nicht zwingend.

Der Aufbau eines oder mehrerer Histogramme in Bezug auf die Hypothesenmatrix kann auf verschiedene Weise realisiert werden.

Erfindungsgemäß erfolgt das Bilden eines Histogramms für ein gegebenes jeweiliges Element der Hypothesenmatrix, indem für - insbesondere sämtliche - Elemente der Hypothesenmatrix im Inneren einer Umgebung des gegebenen Elements die jeweiligen Komponenten der Korrespondenzhypothesen in einer gegebenen Histogrammeinteilung eingeteilt und summiert oder gewichtet summiert werden.

Dabei ist es nicht zwingend, dass sämtliche von der jeweiligen Umgebung des jeweils gegebenen Elements der Hypothesenmatrix erfasste Elemente der Hypothesenmatrix für die Histogrammbildung ausgewertet oder überhaupt betrachtet, d.h. zum Beispiel ausgelesen werden. Vielmehr ist es in Abhängigkeit von der jeweiligen Anwendung und Situation möglich, eine geeignete Auswahl zu treffen, beispielsweise um das erfindungsgemäße Verfahren zu beschleunigen oder um den Rechenaufwand zu reduzieren. Dies wird unten im Detail weiter erläutert.

Die Definition der Umgebung für ein gegebenes jeweiliges Element der Hypothesenmatrix kann durch unterschiedliche Mittel erfolgen.

Erfindungsgemäß ist beim Bilden eines jeweiligen Histogramms die Umgebung für ein gegebenes jeweiliges Element der Hypothesenmatrix jeweils durch ein ganz oder teilweise mit der Hypothesenmatrix überdeckendes Fenster gegeben, insbesondere nach Art eines Rechtecks, eines Polygons, eines Ovals, einer Ellipse oder eines Kreises.

Das in diesem Zusammenhang beschriebene gegebene jeweilige Element der Hypothesenmatrix bildet quasi ein Referenzelement oder Referenzpixel. Diesem Referenzelement oder Referenzpixel wird das jeweils erzeugte Histogramm zugeordnet und für dieses bewertet.

Besonders zuverlässig arbeitet das erfindungsgemäße Verfahren dann, wenn beim Bewerten und insbesondere beim Bilden von Histogrammen sämtliche Elemente der Hypothesenmatrix erfasst werden.

Dabei ist es von besonderem Vorteil, wenn eine jeweilige Umgebung oder ein jeweiliges Fenster verwendet werden, welche für sämtliche Elemente der Hypothesenmatrix hinsichtlich Form und/oder Ausdehnung identisch oder ähnlich sind, weil sich unter diesen Umständen ein hohes Maß an Vergleichbarkeit der Ergebnisse für verschiedene Elemente der Hypothesenmatrix einstellt.

Um in Bezug auf den Ablauf des erfindungsgemäßen Verfahrens zeitkritische oder rechenintensive oder speicherzugriffintensive Arbeitsschritte zur Ablaufoptimierung einzusparen, ist es bei einer anderen vorteilhaften Erfindungsgemäß sind eine jeweilige Umgebung oder ein jeweiliges Fenster als gleitende Umgebung bzw. als gleitendes Fenster ausgebildet. Das bedeutet in der Anwendung, dass das gleitende Fenster als ideales Konstrukt über der Hypothesenmatrix aufgelegt und dort verschoben wird, um das jeweilige Referenzelement und die Umgebung, die zur Histogrammberechnung herangezogen werden soll, festzulegen. Die gleitende Bewegung des Fensters erfolgt dann schrittweise, zum Beispiel schrittweise in Zeilenrichtung Spalte für Spalte oder in Spaltenrichtung Zeile für Zeile, wobei dann ein bestehendes Histogramm für ein neues Referenzelement aktualisiert wird, nämlich durch Hinzufügen oder Eintragen neu einlaufender Elemente der Hypothesenmatrix und Fortlassen bzw. Austragen auslaufender Elemente der Hypothesenmatrix.

Erfindungsgemäß wird beim Bewerten eines Histogramms für ein gegebenes jeweiliges Element als Referenzelement der Hypothesenmatrix auf der Grundlage des Histogramms ein Bewertungswert erzeugt. Dieses dient dann der eigentlichen Bewertung der zum Referenzelement oder Referenzpixel gehörenden Korrespondenzhypothese.

Das Erzeugen des Bewertungswerts erfolgt erfindungsgemäß dadurch, dass ein oder mehrere Werte des Histogramms in mindestens einem Histogrammintervall zu der dem gegebenen Element zugeordneten Korrespondenzhypothese oder zu mindestens einer Komponente davon ausgelesen und zur Bildung des Bewertungswerts summiert oder gewichtet summiert werden.

Dabei können vorzugsweise zusätzlich ein oder mehrere Werte aus einem oder aus mehreren dem zugeordneten Histogrammintervall benachbarten Histogrammintervallen oder aus einer Umgebung benachbarter Histogrammintervalle berücksichtigt werden. Auf diese Weise ist es möglich, die Hypothesenumgebung zur Korrespondenzhypothese des Referenzpixels auf einfache Weise zu berücksichtigen, um die Korrespondenzhypothese des Referenzpixels zu verifizieren oder zu falsifizieren.

Erfindungsgemäß wird beim Verifizieren auf Verifikation einer Korrespondenzhypothese zu einem jeweils gegebenen Element als Referenzelement der Hypothesenmatrix oder einer Komponente davon erkannt, wenn der Bewertungswert einen lokalen oder globalen vorgegebenen Schwellenwert zumindest erreicht. Das bedeutet konkret, dass geprüft wird, ob der Bewertungswert zur Korrespondenzhypothese des Referenzpixels unterhalb oder oberhalb eines Schwellenwerts liegt oder diesen zumindest erreicht. Im ersteren Fall wird die Korrespondenzhypothese als Ausreißer verworfen, im letzteren Fall verifiziert, bestätigt und dann direkt oder in abgewandelter Form als Korrespondenz in die Korrespondenzmatrix bzw. in das Korrespondenzbild übernommen.

Alternativ oder zusätzlich kann es vorgesehen sein, dass beim Verifizieren einer Korrespondenzhypothese zu einem jeweils gegebenen Element als Referenzelement oder Referenzpixel der Hypothesenmatrix oder einer Komponente davon eine zugeordnete und verifizierte Korrespondenz oder eine Komponente davon jeweils durch einen Bewertungswert festgelegt und vorzugsweise als solche als korrespondierendes Element in die Korrespondenzmatrix oder in das Korrespondenzbild eingetragen werden.

Bei konkreten Ausführungsformen können verschiedene technische Maßnahmen ergriffen werden, um das erfindungsgemäße Verfahren bei der Abarbeitung zu beschleunigen und/oder den jeweils notwendigen Verarbeitungsaufwand zu reduzieren.

Darunter kann insbesondere auch verstanden werden, dass die Anzahl der Operationen reduziert wird, beispielsweise die Anzahl der Speicherzugriffe, der Additionen und/oder der Multiplikationen. Dies kann für eine zeitliche Beschleunigung im Sinne einer schnelleren Durchführung ausgenutzt werden, für eine Verringerung der für die Durchführung vorgesehenen Ressourcen oder für beides zugleich.

So ist es besonders vorteilhaft, wenn gemäß einer bevorzugten Ausgestaltungsform des erfindungsgemäßen Verfahrens zur Beschleunigung des Bewertens der Hypothesenmatrix und/oder des bedingten Verifizierens der Korrespondenzhypothesen ein jeweils aktuell erzeugtes Histogramm, welches insbesondere in einem Histogrammspeicher gespeichert wird, zum parallelen und/oder seriellen Verifizieren mehrerer Korrespondenzhypothesen verwendet wird, insbesondere zum Bewerten von Korrespondenzhypothesen einer Mehrzahl von Elementen der Hypothesenmatrix als Referenzelemente oder Referenzpixeln der Hypothesenmatrix, die insbesondere direkt zueinander benachbart sein können.

In diesem Zusammenhang ist es weiter von Vorteil, wenn gemäß einer anderen Ausgestaltungsform des erfindungsgemäßen Verfahrens ein verwendeter Histogrammspeicher so organisiert wird, dass ein zu Grunde liegender Taktzyklus der Verarbeitung ausreichend ist, um den Wert zu einem jeweils aktuellen Element als Referenzelement der Hypothesenmatrix aus dem Histogramm sowie Werte zu einem oder zu mehreren weiteren Intervallen des Histogramms auszulesen.

Dies kann in vorteilhafter Weise erfolgen, indem (i) eine zu Grunde liegende Leseadresse berechnet wird durch Addieren oder Subtrahieren des Wertes 1 in Bezug auf den zum aktuellen Element in der Hypothesenmatrix auf gespeicherten Wert und/oder (ii) durch Clustern von Intervallen des Histogramms, insbesondere in Bezug auf einen Dualport des zu Grunde liegenden Histogrammspeichers.

Alternativ oder zusätzlich ist es zur Beschleunigung des Bewertens der Hypothesenmatrix und/oder des bedingten Verifizierens der Korrespondenzhypothesen denkbar, das bedingte Verifizieren parallel, insbesondere gleichzeitig, und/oder seriell für eine Mehrzahl von Korrespondenzhypothesen zu einer entsprechenden Mehrzahl von Elementen im Sinne von Referenzelementen der Hypothesenmatrix durchzuführen.

Es kann ein gegebener Befüllungszustand eines Histogramms genutzt werden, um mehrere Hypothesen - nämlich zur Referenzposition im Hypothesenbild und zu nahen Nachbarn - zu verifizieren. Da das Aktualisieren des Histogramms aufwendig ist und mit diesem Vorgehen die Anzahl der notwendigen Aktualisierungen reduzieren kann - z.B. auf 1/4 - ergibt sich eine Einsparung beim Verarbeitungsaufwand, z.B. im Sinne der Anzahl der Speicherzugriffe, Additionen, Gewichtungen und dergleichen.

Es ist auch denkbar, dass nicht sämtliche Elemente der Hypothesenmatrix im Inneren einer Umgebung des jeweils gegebenen Elements als Referenzelement der Hypothesenmatrix und insbesondere des zu Grunde liegenden gleitenden Fensters beim Aktualisieren eines Histogramms berücksichtigt werden.

Dabei können insbesondere weniger Zeilen, als es der maximalen Zeilenzahl des gleitenden Fensters entspricht, verwendet werden, insbesondere mit einer Zeilenzahl von 4.

Die vorliegende Erfindung betrifft des Weiteren ein Betriebsassistenzverfahren und insbesondere Fahrassistenzverfahren für eine Vorrichtung und insbesondere für ein Fahrzeug, bei welchem Bilder erfasst und mit einem Verfahren nach einem erfindungsgemäßen Verfahren bewertet werden und bei welchem ein Ergebnis der Bewertung bei der Steuerung des Betriebs der Vorrichtung verwendet wird.

Ein weiteres Ausführungsbeispiel der vorliegenden Erfindung ist eine Vorrichtung zur Bewertung von Bildern und insbesondere zum Bewerten von Korrespondenzhypothesen von Bildern gemäß Anspruch 8.

Die erfindungsgemäße Vorrichtung ist insbesondere als ASIC, als frei programmierbare digitale Signalverarbeitungsvorrichtung oder als Kombination davon ausgebildet.

Des Weiteren wird durch die vorliegende Erfindung ein Computerprogramm gemäß Anspruch 9 angegeben, welches eingerichtet ist, ein erfindungsgemäßes Verfahren auszuführen, wenn es auf einem Computer oder einer digitalen Signalverarbeitungseinrichtung ausgeführt wird.

Ferner schafft die vorliegende Erfindung auch ein maschinenlesbares Speichermedium gemäß Anspruch 10.

### Kurzbeschreibung der Figuren

Unter Bezugnahme auf die beigefügten Figuren werden Ausführungsformen der Erfindung im Detail beschrieben.
- Figur 1: zeigt schematisch in Form eines Flussdiagramms eine Ausführungsform des erfindungsgemäßen Verfahrens und illustriert die Korrespondenz zwischen den zu Grunde liegenden Bildern, der Hypothesenmatrix und der Korrespondenzmatrix.
- Figuren 2 bis 5: erläutern schematisch mögliche Zusammenhänge zwischen einer zu Grunde liegenden Hypothesenmatrix und einem angewandten gleitenden Fenster.
- Figur 6: zeigt Graphen, welche jeweils ein Histogramm zu einer Komponente einer zu Grunde liegenden Korrespondenzmatrix darstellen.
- Figur 7: erläutert schematisch ebenfalls einen möglichen Zusammenhang zwischen einer zu Grunde liegenden Hypothesenmatrix und einem angewandten gleitenden Fenster.
- Figuren 8 bis 10: erläutern Maßnahmen, die zum Beschleunigen von Ausführungsformen des erfindungsgemäßen Verfahrens ergriffen werden können.

### Bevorzugte Ausführungsformen der Erfindung

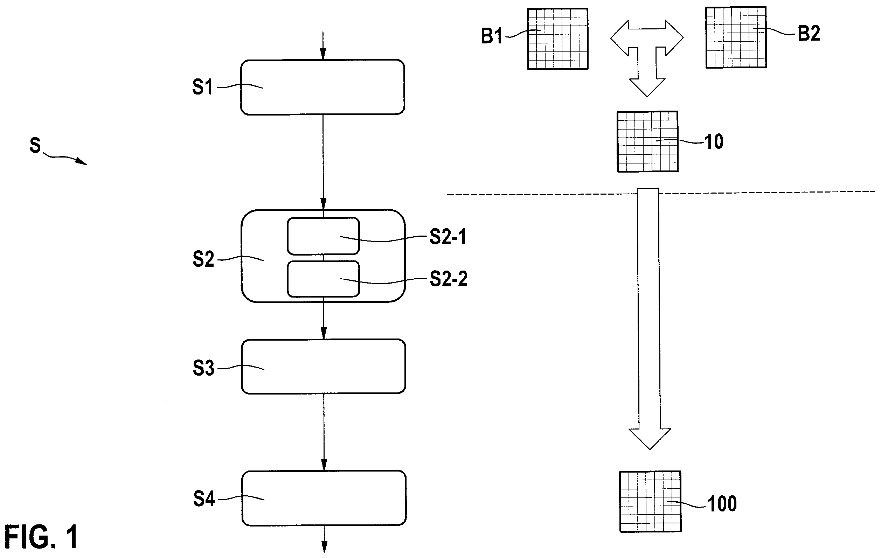

Nachfolgend werden unter Bezugnahme auf die Figuren 1 bis 10 Ausführungsbeispiele der Erfindung und der technische Hintergrund im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Figur 1 zeigt schematisch in Form eines Flussdiagramms eine Ausführungsform des erfindungsgemäßen Verfahrens S zum Bewerten von Bildern B1 und B2 und illustriert die Korrespondenz zwischen den zu Grunde liegenden Bildern B1, B2, der Hypothesenmatrix 10 und der Korrespondenzmatrix 100.

In einem ersten Schritt S1 des erfindungsgemäßen Verfahrens S zum Bewerten von Bildern B1 und B2 wird zunächst eine Hypothesenmatrix 10 bereitgestellt, welche auch als Hypothesenbild aufgefasst werden kann und als Elemente Korrespondenzhypothesen [u, v] - hier mit Komponenten u und v - aufweist, die bewertet werden sollen, um zu entscheiden, ob eine jeweilige Korrespondenzhypothese tatsächlich zu einer Korrespondenz führt oder als Ausreißer abgelehnt werden muss.

Dabei kann [u, v] als ein Vektor aufgefasst werden, dessen Komponenten u und v jeweils die Einheit Pixel besitzen. Ein solcher Vektor [u, v] kann auf einen Vektor [x, y] addiert oder von ihm subtrahiert werden. Der Vektor [x, y] kann dabei eine Position (als Pixelkoordinate) im Bild B1 oder B2 darstellen. Die Summe [x, y] + [u, v] oder Differenz [x, y] - [u, v] kann eine Position im jeweils anderen Bild darstellen. Somit stellt ein Vektor [u, v] an einer Position [x, y] eine Beziehung im Sinne einer Zuordnung zu einer Position im jeweils anderen Bild dar. Diese Beziehung kann einer Korrespondenz entsprechen: Das ist der Fall, wenn an beiden Bildpositionen derselbe Szenenpunkt dargestellt ist. Solche korrekten Korrespondenzen gilt es zu finden. Im Falle der Bestätigung wird [u, v] an der Position der [x, y] in der Korrespondenzmatrix 100 gespeichert und als gültig gekennzeichnet. Im Falle der Ablehnung wird dies an der Position der [x, y] entsprechend vermerkt. Zur Gültig/Ungültig-Kennzeichnung kann ein Bit pro Position [x, y] vorgesehen sein oder ein spezieller Vektor [u, v], der z.B. am Rand des Wertebereichs von u und v liegt.

Ein Vektor [u, v] weist im Allgemeinen nicht ganzzahlige Werte auf. Der Vektor [x, y] weist dagegen bevorzugt ganzzahlige Werte auf.

Für die Entscheidung darüber, ob eine Korrespondenzhypothese als Ausreißer zu bewerten ist oder nicht, werden in einem zweiten Schritt S2 die Hypothesenmatrix 10 bzw. das Hypothesenbild bewertet und auf Grund eines Bewertungsergebnisses in einem nachfolgenden Schritt S3 verifiziert. Das bedeutet im Einzelnen, dass für jede Korrespondenzhypothese [u, v] bzw. für jede der Komponenten u und v entschieden wird, ob die Korrespondenzhypothese [u, v] bzw. Komponente u, v verworfen und abgelehnt oder bestätigt wird.

Die Gesamtheit aller bestätigten Korrespondenzhypothesen [u, v] bildet dann die entsprechende Korrespondenzmatrix 100, welche auch als Korrespondenzbild bezeichnet werden kann und welche die bestätigten Korrespondenzen als Elemente oder Pixel enthält.

Erfindungsgemäß erfolgt das Bewerten S2 der Hypothesenmatrix 10, indem für jedes Element 1 der Hypothesenmatrix 10, hier fungierend als so genanntes Referenzelement oder Referenzpixel, für eine jeweilige zugeordnete Korrespondenzhypothese [u, v] bzw. für die sie bildenden Komponenten u, v ein oder mehrere Histogramme 63, 64 bezüglich der Werte der Komponenten u, v der Korrespondenzhypothese [u, v] in einem Schritt S2-1 gebildet werden.

Diese Histogramme 63, 64 werden dann in einem nachfolgenden Schritt S2-2 bewertet.

In Figur 1 noch dargestellt, dass die Bilder B1, B2, die Hypothesenmatrix 10, auch aufgefasst als Hypothesenbild, und die Korrespondenzmatrix 100, auch aufgefasst als Korrespondenzbild, jeweils dargestellt werden können als zueinander korrespondierende Matrizen und/oder als entsprechend eingerichtete Speicher oder Speicherbereiche. Dies dient der vereinfachten Darstellung, ist jedoch nicht zwingend, solange die jeweilige 1-zu-1-Korrespondenz zwischen wenigstens einem der Bilder B1, B2, der Hypothesenmatrix 10 und der Korrespondenzmatrix 100 und ihren jeweiligen Elementen oder Pixeln hergestellt werden kann.

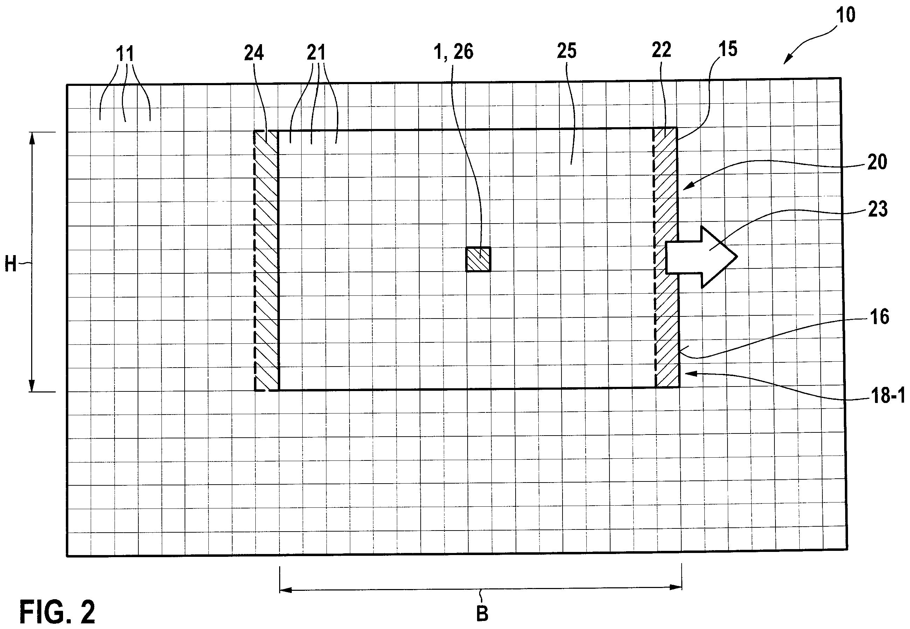

Die Figuren 2 bis 5 erläutern schematisch mögliche Zusammenhänge zwischen einer zu Grunde liegenden Hypothesenmatrix 10 und einem angewandten gleitenden Fenster 20, welches eine Umgebung zur Erhebung eines Histogramms 63, 64 zu einem jeweils gegebenen Referenzpixel 1 definiert oder bildet.

In sämtlichen Ausführungsformen, die in den Figuren 2 bis 5 dargestellt sind, ist die Gesamtheit der Korrespondenzhypothesen [u, v] als rechteckige Hypothesenmatrix 10 mit einer bestimmten Spaltenzahl und einer bestimmten Zeilenzahl dargestellt. Die Hypothesenmatrix 10 kann auch als Hypothesenbild aufgefasst werden und weist Elemente 11 auf, die auch als Pixel bezeichnet werden können. Jedes Element 11 der Hypothesenmatrix 10 weist somit eine Korrespondenzhypothese [u, v] auf, die aus einer Komponente oder, wie hier, aus einer Mehrzahl von Komponenten u, v bestehen kann.

Dabei muss jedoch nicht jede Korrespondenzhypothese [u, v] einen gültigen Inhalt aufweisen, denn es ist beispielsweise möglich, dass für eine bestimmte Bildposition keine Hypothese bestimmt werden konnte, z.B. weil der jeweilige Szenenpunkt zwar im Bild B1 sichtbar, im Bild B2 jedoch verdeckt oder aus anderen Gründen nicht auffindbar ist.

Daher ist vorgesehen, dass für jede Speicherstelle der Hypothesenmatrix 10 eine Gültig/Ungültig-Information angegeben werden kann. Zur Gültig/Ungültig-Kennzeichnung kann ein Bit pro Position [x, y] vorgesehen sein oder ein spezieller Vektor [u, v], der z.B. am Rand des Wertebereichs von u und v liegt.

Als ungültig gekennzeichnete Hypothesen werden nachfolgend stets ignoriert. Somit beeinflussen sie die Histogramme 63, 64 nicht. Eine als ungültig gekennzeichnete Hypothese kann auch nicht zu einem Ergebnis in der Korrespondenzmatrix 100 führen.

Die Art der Korrespondenzhypothesen [u, v] und ihrer Komponenten u, v ist abhängig von dem zu Grunde liegenden Verfahren S1 des Bereitstellens der Korrespondenzhypothesen [u, v]. Dabei fließen die physikalische Natur der zu Grunde liegenden erfassten Bilder B1 und B2 und die Natur der Mechanismen zur Korrespondenzbildung selbst ein. So können der Korrespondenzbildung ein Konzept des optischen Flusses (OF) und/oder Aspekte der Stereodisparität und gegebenenfalls weitere Aspekte zu Grunde gelegt werden.

Bei den in den Figuren 2 bis 5 gezeigten Beispielen wird eine jeweilige Umgebung zu einem Referenzpixel 1 der zu Grunde liegenden Hypothesenmatrix 10 von einem gleitenden Fenster 20 mit einer Breite B und einer Höhe H mit entsprechenden Spalten- bzw. Zeilenzahlen gegeben. Das gleitende Fenster 20 deckt jeweils einen Bereich 15 des Hypothesenbildes 10 ab und weist entsprechende Elemente 21 auf, die ebenfalls als Pixel bezeichnet werden können. Dabei ist ein Element, welches mit 1 bzw. 26 bezeichnet wird, ausgezeichnet und dient als Referenzpixel oder als Referenzelement 1, 26 in Bezug auf das gleitende Fenster 20. Das Referenzelement oder -pixel 1, 26 kann in Bezug auf das Fenster ein zentrales Pixel sein.

Die nachfolgend beschriebenen Histogramme 63, 64 werden immer auf der Grundlage des gleitenden Fensters 20 und des durch das gleitende Fenster 20 abgedeckten Bereichs 15 der Elemente 11, 21 der zu Grunde liegenden Hypothesenmatrix 10 ermittelt.

Eine Aktualisierung der unten zu beschreibenden Histogrammen 63, 64 erfolgt vorteilhafterweise durch einen gleitenden Versatz z.B. entlang der Zeilenrichtung, also in den Figuren 2 bis 5 horizontal in Richtung des Pfeiles 23. Bei dieser gleitenden Bewegung, also bei dem Versatz fallen die Pixel oder Elemente 24 der Hypothesenmatrix 10 auf der linken Seite oder Rückseite 17 aus dem gleitenden Fenster 20 heraus, während auf der rechten Seite, die auch als Stirnseite 16 bezeichnet wird, Pixel 22 unter oder in das gleitende Fenster 20 gelangen.

Die Aktualisierung eines Histogramms 63, 64 erfolgt, indem die verlassenden Pixel 24 ausgetragen und ihre Zähler bzw. Gewichte aus dem Histogramm 63, 64 ausgebucht und die Zähler oder Gewichte der hinzukommenden Pixel 22 in das Histogramm 63, 64 eingebucht werden.

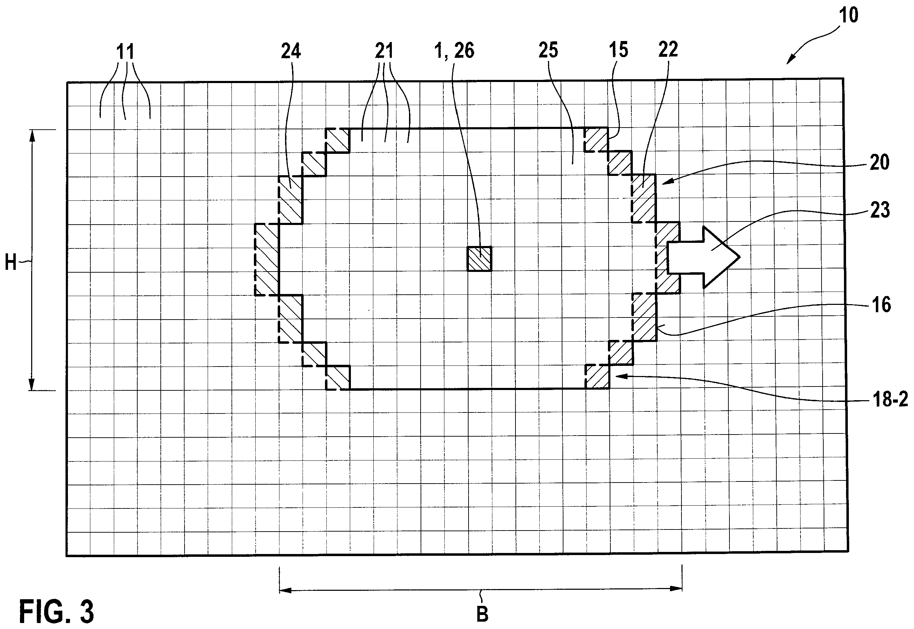

Während in Figur 2 das gleitende Fenster 20 eine Rechteckform 18-1 aufweist, ist die Form 18-2 bei der Ausführungsform gemäß Figur 3 die eines Ovals.

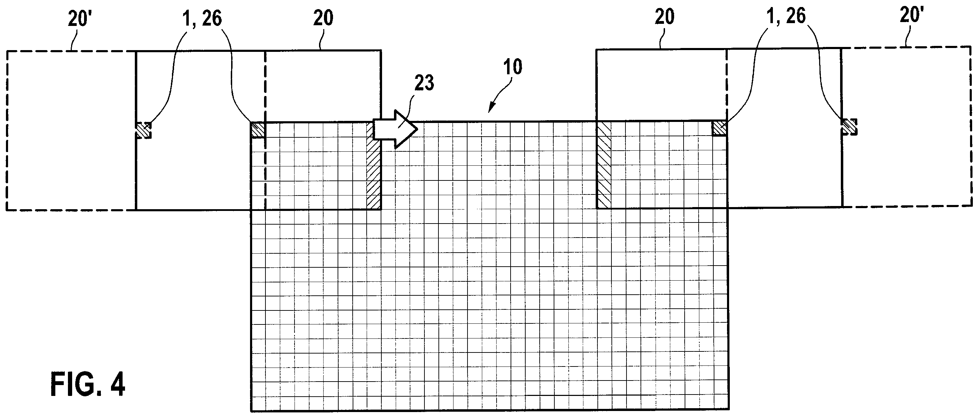

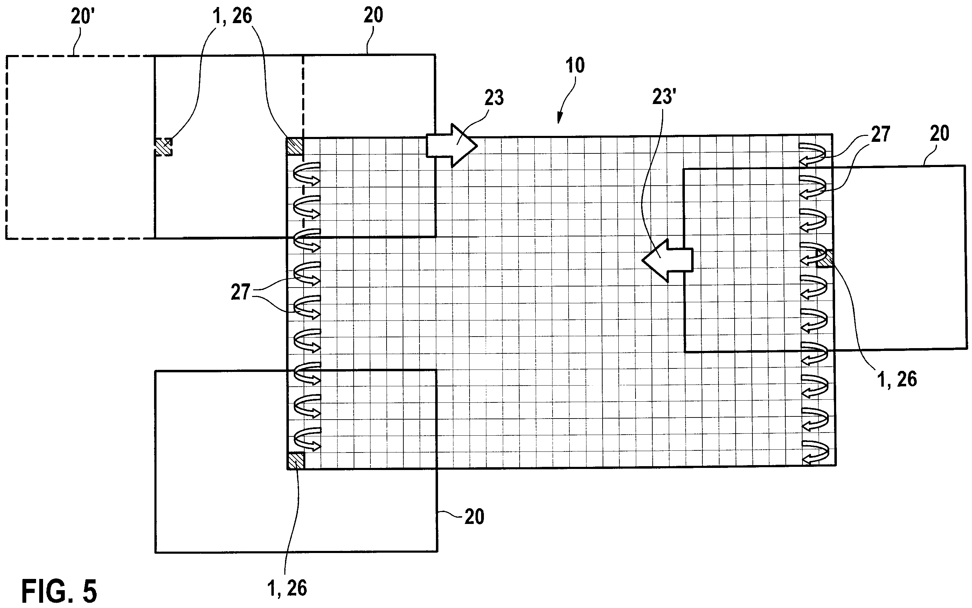

Die Figuren 4 und 5 erläutern die Handhabung von Referenzpixeln 1, 26 und insbesondere von gleitenden Fenstern 20, wenn sich das Referenzpixel 1, 26 am Rand des Hypothesenbildes 10 befindet, so dass, wenn in diesem Fall die Referenzpixel 1, 26 als zentrale Pixel des gleitenden Fensters 20 fungieren, das gleitende Fenster 20 über den Rand des Hypothesenbildes 10 hinausragt.

Figur 5 erläutert dabei insbesondere noch eine Hin- und Herbewegung des gleitenden Fensters 20 in den Richtungen 23 und 23' mit einem zwischen zeitigen Zeilenwechsel in der vertikalen Richtung 27.

Diese Zusammenhänge werden in unten folgenden Abschnitten weiter erläutert.

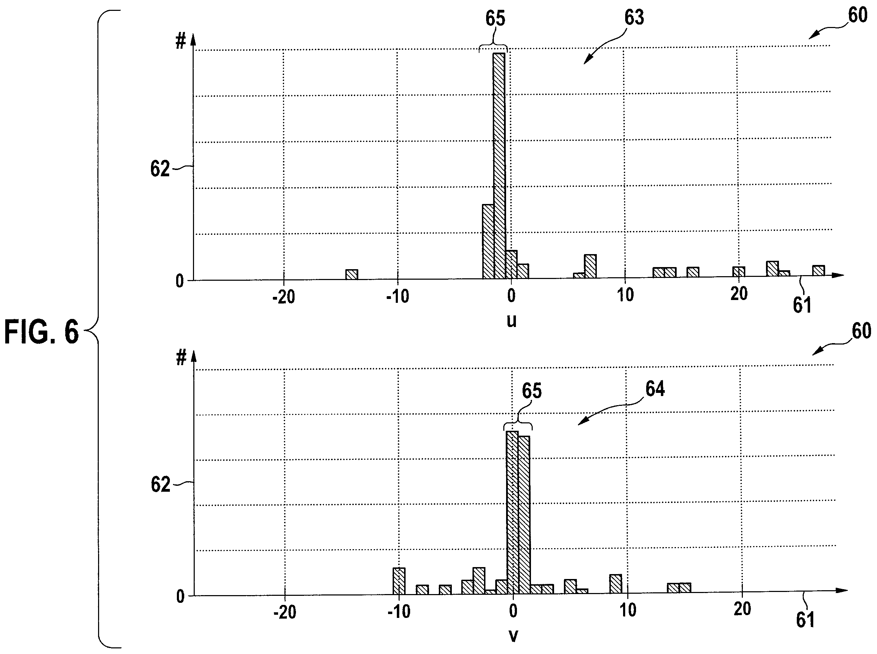

Figur 6 zeigt Graphen 60, welche jeweils ein Histogramm 63, 64 zu einem Element als Referenzpixel oder Referenzelement 1, 26 einer zu Grunde liegenden Korrespondenzmatrix 10 darstellen, und zwar für die Komponenten u und v der Korrespondenzhypothese [u, v].

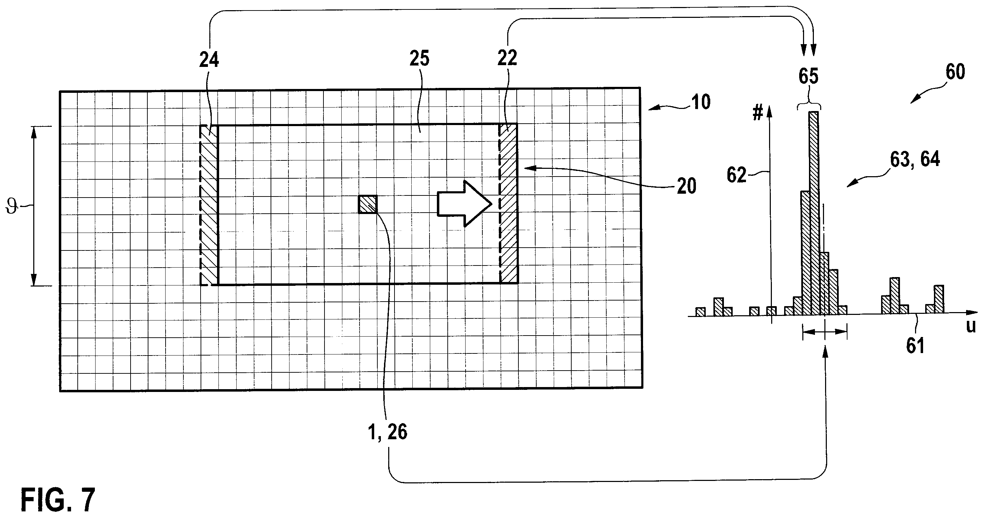

Figur 7 erläutert schematisch ebenfalls einen möglichen Zusammenhang zwischen einer zu Grunde liegenden Korrespondenzmatrix 10 und einem angewandten gleitenden Fenster 20.

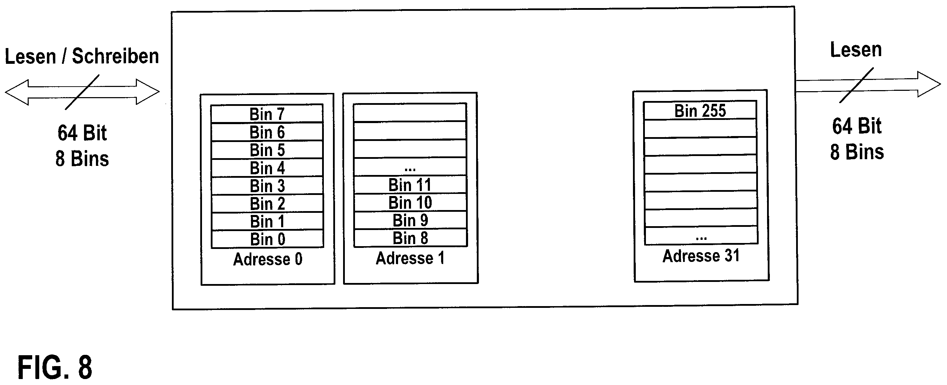

Figuren 8 bis 10 erläutern Maßnahmen, die zum Beschleunigen von Ausführungsformen des erfindungsgemäßen Verfahrens S ergriffen werden können. Diese Maßnahmen werden in folgenden Abschnitten im Detail erläutert und betreffen insbesondere die gleichzeitige Bewertung von Korrespondenzhypothesen [u, v] zu einer Mehrzahl von benachbarten Referenzpixeln 1, 26 der zu Grunde liegenden Hypothesenmatrix 10.

Diese und weitere Merkmale und Eigenschaften der vorliegenden Erfindung werden an Hand der folgenden Darlegungen weiter erläutert:
Dem Thema Korrespondenzbildung begegnet man im Bereich Computer-Vision, also dem maschinellen oder computergestützen Sehen, insbesondere beim optischen Fluss und bei der Stereo-Disparität.

Beim Optischen Fluss, vorangehend und nachfolgend auch mit OF bezeichnet, werden Korrespondenzen in zeitlicher Richtung gebildet, indem Zuordnungen zwischen Koordinaten in einem ersten Bild und Koordinaten in einem zweiten Bild bestimmt werden. Eine solche Korrespondenz gibt dann an, wie sich die Projektion eines Punktes in der 3D-Szene ins 2D-Bild von einer alten Koordinate zu einer neuen Koordinate zeitlich weiterbewegt hat.

Dabei kann die Bewegung im Bild durch die Bewegung des Szenenpunktes, durch die Bewegung der Kamera oder durch beides zugleich hervorgerufen sein.

Bei Stereovision werden die beiden Bilder etwa zeitgleich von zwei Kameras erfasst, die sich an unterschiedlichen Orten befinden. Die relative Anordnung der Kameras ist dabei in der Regel fest und bekannt. Die Korrespondenzbildung ermöglicht die Bestimmung der Entfernung zum Punkt in der 3D-Szene mittels Triangulation.

Es sind vielfältige Verfahren der Korrespondenzbildung bekannt, diese werden hier vorausgesetzt.

Die Ergebnisse der Korrespondenzbildung dienen zunächst als Hypothesen, sind also potenzielle Korrespondenzen, von denen einige oder viele fehlerhaft sein können und dann auch als Ausreißer oder Outlier bezeichnet werden.

Dabei können pro Bildkoordinate eine oder mehrere Hypothesen oder auch keine Hypothese vorliegen.

Eine Aufgabe der vorliegenden Erfindung besteht darin, ein möglichst zuverlässiges Verfahren für die Verifikation von Korrespondenzhypothesen anzugeben, so dass möglichst viele Ausreißer erkannt und gegebenenfalls eliminiert werden und die korrekten Hypothesen - als gültige Werte oder Inlier - überwiegend erhalten bleiben.

Liegen pro Bildkoordinate mehrere unterschiedliche Hypothesen vor, so ist in der Regel höchstens eine davon korrekt.

Ein Kernaspekt der vorliegenden Erfindung ist die Schaffung eines histogrammbasierten Verfahrens der Verifikation von Korrespondenzhypothesen. Dabei liegt die Annahme zu Grunde, dass lokale Nachbarschaften von Bildpunkten beim Übergang von einem ersten Bild zu einem zweiten Bild meistens erhalten bleiben.

Ein Vektor - z.B. ein Vektor des optischen Flusses, der auch als optischer Flussvektor bezeichnet wird, - der die Koordinaten von einem in beide Bilder projizierten Szenenpunkt miteinander verbindet, verhält sich also meistens ähnlich wie die Vektoren an den benachbarten Bildpositionen. "Ähnlich" bedeutet dabei, dass er eine ähnliche Länge und eine ähnliche Orientierung aufweist bzw. ähnliche Vektorkomponenten aufweist, z.B. in Bezug auf die horizontale Komponente u und die vertikale Komponente v.

Diese Annahme ist in natürlichen Bildern, die z.B. von einer Fahrerassistenz-, Robotik- oder Überwachungskamera stammen, meistens im größten Teil der Bilder erfüllt. Beispielsweise an Objektkanten, insbesondere an Tiefensprüngen in der Szene, kann sie aber verletzt sein.

Zu entsprechend aufeinanderfolgenden Bildern ermittelte Flussfelder können auf verschiedene Weise visualisiert werden, zum Beispiel mittels einer Farbkodierung, wobei eine jeweilige Farbe die Flussrichtung angibt, z. B. gelb: nach unten, blau: nach oben, pink: nach links, grün: nach rechts. Die Farbsättigung gibt die Länge des Flussvektors an, so dass der Nullvektor zum Beispiel weiß abgebildet wird. Schwarze Bereiche können dann genutzt werden für die Fälle, für die kein Wert für den optischen Fluss bestimmt werden kann.

Bei natürlichen Bildern - also zum Beispiel bei der optischen Abbildung natürlicher Szenen - ergibt sich, dass benachbarte Pixel zeitlich aufeinanderfolgender oder bei Stereovision einander zugeordneter Bilder meistens ähnliche Flussvektoren bzw. Korrespondenzvektoren aufweisen und dass somit die Annahme der Ähnlichkeit in der lokalen Nachbarschaft gut erfüllt ist. Diese Annahme wird von der Erfindung in vorteilhafter Weise genutzt.

Wie oben bereits erwähnt wurde, gelten Ausnahmen insbesondere an Objektkanten, beispielsweise an der Kante zwischen einem abgebildeten Fußgänger im Vordergrund des Bildes zum ebenfalls abgebildeten Hintergrund des Bildes oder an der Kante eines abgebildeten Radfahrers im Vordergrund des Bildes zum Hintergrund und dergleichen. Dort ist die Annahme häufig aber immer noch teilweise erfüllt, denn zumindest ein Teil der benachbarten Pixel weist ähnliche Korrespondenzen, z.B. Flussvektoren, auf. Auch solche Fälle werden von der Erfindung mit abgedeckt.

Im Zusammenhang mit der vorliegenden Erfindung wird beispielhaft meistens vom optischen Fluss als Beispiel für die Korrespondenzbildung gesprochen. Jedoch sind andere Anwendungen, zum Beispiel Stereosysteme, Multi-KameraSysteme und weitere ebenfalls mit abgedeckt. Es ist dabei nicht nötig, dass die zu Grunde liegenden Kamerasysteme kalibriert sind. So ist beispielsweise die bei Stereosystemen häufig eingesetzte - auf einer Kalibrierung basierende - epipolare Rektifizierung ebenfalls nicht notwendig, um die vorliegende Erfindung anwenden zu können. Sogar für viel allgemeinere Beispiele der Korrespondenzbildung, wie das Auffinden ähnlicher Textabschnitte in einem Dokument oder über Dokumentgrenzen hinweg, kann diese Erfindung Anwendung finden.

Trägt man die Korrespondenzhypothesen der lokalen Umgebung und insbesondere deren Werte für die Bewegung in horizontaler Richtung oder u-Richtung und vertikaler Richtung oder v-Richtung jeweils in ein einzelnes und dann eindimensionales Histogramm oder in ein kombiniertes, gemeinsames und dann zweidimensionales Histogramm ein, so bilden sich bei geeigneter Skalierung im Histogramm Peaks oder Maxima aus, die von der dominanten lokalen Bewegung stammen. Dies ist zum Beispiel in Figur 6 für die Verwendung zweier unabhängiger eindimensionaler Histogramme dargestellt.

Es existieren also mehrere Möglichkeiten für die Wahl geeigneter Histogramme:
- Zwei eindimensionale Histogramme:
   Ein eindimensionales Histogramm dient der ersten Bewegungskomponente, zum Beispiel der horizontalen Bewegung u. Das zweite eindimensionale Histogramm dient der dazu senkrechten Bewegungskomponente, z.B. der vertikalen Bewegungskomponente v.
   Die Bewegungskomponenten u, v müssen nicht an oder parallel zu den Bildachsen der jeweils zu Grunde liegenden Bilder ausgerichtet sein. Es sind beispielsweise diagonale Komponenten ebenfalls denkbar oder jede andere Ausrichtung.
   Die Komponenten können auch andere Größen darstellen, z.B. die Richtung und die Länge eines Flussvektors.
- Ein mehrdimensionales Histogramm (Verbundhistogramm),
   Bei einem mehrdimensionalen Histogramm, welches auch als Verbundhistogramm bezeichnet wird, zum Beispiel bei einem zweidimensionalen, werden die beiden Komponenten u, v nicht unabhängig voneinander betrachtet werden, sondern gemeinsam.

Des Weiteren sind die Wertebereiche und die Auflösungen festzulegen. Der Wertebereich des jeweiligen Histogramms orientiert sich sinnvollerweise an einem globalen oder lokalen Suchbereich der Korrespondenzbildung, z.B. an der minimal und der maximal auffindbaren horizontalen Bewegung beim optischen Fluss.

Die jeweilige Auflösung bzw. die Intervallbreiten der Histogrammintervalle, die auch als Histogramm-Bins bezeichnet werden, können sich beispielsweise an der gewünschten Genauigkeit oder an der Auflösung der gegebenen Hypothesen oder an der Menge des zur Verfügung stehenden Speichers orientieren.

Die Intervallbreiten sollten jedoch nicht zu klein gewählt werden, sonst besteht die Gefahr, dass jeweils zu wenige Daten in ein Histogramm-Bin oder Histogrammintervall fallen und dadurch die Bestimmung von Mehrheiten wegen mangelnder Eindeutigkeit erschwert bzw. aufwändiger wird.

Um unerwünschte Quantisierungseffekte zu vermeiden oder zu verringern, die durch die gegebenen Intervallbreiten entstehen können, kann es von Vorteil sein, den in das Histogramm einzutragenden Wert - z.B. ein Inkrement +1 oder Dekrement -1 oder ein additives vorzeichenbehaftetes Gewicht nicht nur in ein Bin einzutragen, sondern gewichtet auf die zwei nächstgelegenen Bins zu verteilen.

Beispiel: Anstatt den Wert u = 9,4 auf 9 zu runden und an entsprechender Stelle im Histogramm +1 zu addieren würde man bei 9 ein Gewicht +0,6 addieren und bei 10 ein Gewicht +0,4 addieren und hätte somit das Gesamtgewicht von 1,0 auf zwei Bins verteilt, und zwar mit einer Gewichtung entsprechend den Abständen.

Das jeweilige Histogramm kann als gleitendes Histogramm oder mittels eines gleitenden Fensters ausgeführt werden, wie dies auch im Zusammenhang mit Figur 2 dargestellt ist. Dadurch werden Rechenaufwand und Datentransfers vom/zum Speicher eingespart, weil der Inhalt des Histogramms nicht immer als Ganzes wieder neu aufgebaut werden muss, sondern fortlaufend aktualisiert werden kann.

Das gleitende Histogramm kann durch ein gleitendes Fenster realisiert werden, das z.B. eine rechteckige Form oder eine andere Form besitzt, z.B. die Form eines Kreises, eines Ovals, einer Ellipse, eines Polygons, usw.

Es ist vorteilhaft, zusätzlich zum Histogramm auch noch einen Speicher vorzusehen, in dem die Summe aller Eintragungen ins Histogramm fortlaufend mitgeführt wird, also die Anzahl der unter dem Fenster befindlichen Hypothesen bzw. der Summe der unter dem Fenster befindlichen Gewichte. Bei jedem Schreibzugriff ins Histogramm muss diese Summe also aktualisiert werden.

Die Bereitstellung des Summenspeichers bietet den Vorteil, dass die Anzahl bzw. Gewichtssumme jederzeit abgerufen werden kann und nicht erst neu berechnet werden muss. Sie kann z. B. zum Zweck der Normierung nützlich sein, beispielsweise um festzustellen, wie groß der relative Anteil von Hypothesen (unter dem aktuellen Fenster) ist, die eine bestimmte Bewegungshypothese unterstützen.

Bei zwei eindimensionalen Histogrammen für die Vektorkomponenten genügt es, den Summenspeicher nur einmal vorzusehen, da die Summe der jeweils eingetragenen Gewichte bei beiden Histogrammen in der bevorzugten Ausführung identisch ist.

### Gleitendes Fenster (Ausführungsbeispiel)

Ein z.B. rechteckiges Fenster 20 gemäß Figur 2 mit der Breite B und Höhe H oder ein anders geformtes Fenster 20, z. B. gemäß Figur 3, wird virtuell über das Bild 10 und oder den Speicher von Hypothesen bzw. ihrer Komponenten geschoben. In den Figuren 2 und 3 ist jeweils eine Momentaufnahme gezeigt. Das Fenster 20 als gleitendes Fenster (engl. sliding window) wird beispielsweise pixelspaltenweise von links nach rechts über das Bild 10 von Korrespondenzhypothesen geschoben oder über ein Bild 10, das jeweils eine Komponente der Korrespondenzhypothesen enthält, z. B. die u-Komponente. Die Bewegung des Fensters 20 wird zum Beispiel durch den Pfeil 23 charakterisiert.

Das Fenster 20 befindet sich gerade an der mit dem schwarzen Rahmen markierten Position. Die Pixel 22 am rechten Rand des Fensters 20 sind also soeben unter das Fenster 20 gewandert und die Pixel 24 haben das Fenster 20 am linken Rand verlassen. Für genau diese Pixel 22 und 24 wird eine Aktualisierung oder ein Update durchgeführt. Dabei werden die Hypothesen von den Positionen der Pixel 22 in das Histogramm eingetragen, indem entsprechende Zähler inkrementiert oder entsprechende Gewichte zu den einzelnen Histogrammintervallen oder Bins addiert werden. Für die Pixel 24 wird das "gegenteilige" Update durchgeführt, und zwar in dem Sinne, dass hier die entsprechenden Zähler wieder dekrementiert bzw. die entsprechenden Gewichte in Bezug auf die einzelnen Histogrammintervalle oder Bins subtrahiert werden. Dabei wird sichergestellt, dass sich - wenn eine jeweilige Aktualisierung oder ein Update fertig sind - im Histogramm genau diejenigen Hypothesen berücksichtigt sind, die sich gerade unter dem Fenster 20 befinden, also innerhalb des Rahmens zum Fenster 20. Hypothesen außerhalb des Fensters 20 haben dagegen keinen Einfluss auf den Inhalt des Histogramms.

Dabei können für jede Bildposition (hier als Pixel dargestellt) eine oder mehrere Hypothesen oder auch keine vorhanden sein. Beispielsweise können 0 bis 3 Hypothesen pro Pixel gespeichert sein. Das bedeutet, dass beim Update diese bis zu drei Hypothesen in das Histogramm ein- bzw. ausgetragen werden.

Das Pixel 1, 26 stellt eine Referenzposition dar, die beispielsweise etwa im Zentrum des Fensters 20 liegt. Das Pixel 1, 26 ist dasjenige Pixel, auf welches sich das aktuell erstellte Histogramm bezieht. Für die Hypothesen an oder nahe der Referenzposition können anhand des aktuellen Histogramminhalts Aussagen
z.B. zum Zwecke der Verifikation getroffen werden, wie später noch erläutert wird.

Der Pfeil 23 zeigt an, in welcher Richtung das Fenster 20 weitergeschoben wird, wenn der Histogramm-Update-Schritt und der Verifikationsschritt abgeschlossen sind. Bevorzugt werden Orientierung des Fensters 20 und Richtung 23 des Verschiebens oder Gleitens des Fensters 20 so gewählt, dass das Fenster 20 beim Gleiten oder Verschieben die geringstmögliche "Stirnfläche" oder Vorderkante hat, denn dann ist die Zahl der Pixel, die in die Aktualisierung eingehen, minimal. In diesem Beispiel gehen 2·H Pixel oder Bildpositionen in das Update ein. Diese Anzahl ist kleiner als 2·B.

Ein jeweiliges Fenster 20 muss nicht vollständig im Bild 10 liegen, sondern kann auch mit den Rändern überlappen. In Figur 4 ist gezeigt, wie das Fenster 20 links in das Bild 10 hineingleitet und rechts hinaus gleitet. Die Referenzposition 1, 26 liegt hier in der ersten Bildzeile.

Dieses Vorgehen gemäß Figur 4 kann vorteilhaft sein, also in dem das Fenster 20 schrittweise in das Bild 10, also die Hypothesenmatrix, hineingeschoben wird. Es ist in diesem Fall niemals nötig, eine initiale Befüllung des Histogramms 63, 64 vorzunehmen. Vielmehr kann von einem leeren Histogramm 63, 64 - alle Bins sind auf 0 gesetzt - ausgegangen werden und alleine der Update-Prozess stellt auch am Bildrand jeden benötigten Befüllungszustand des jeweiligen Histogramms 63, 64 her.

Figur 4 zeigt beispielhaft, wie das Fenster 20 in Richtung des Pfeils 23 von links nach rechts geschoben wird und die Überlappung dabei zunächst anwächst. Die Werte zu den Pixeln 22 am rechten Rand des Fensters 20 werden eingetragen, während am linken Rand des Fensters 20 noch keine Pixel vorhanden sind, also noch nichts ausgetragen wird. Am rechten Rand des Bildes 10 ist es umgekehrt. Dort werden so lange die Werte zu den Pixeln 24 am linken Rand des Fensters 20 ausgetragen, während am rechten Rand keine Pixel mehr vorhanden sind, also nichts mehr eingetragen wird, bis das Histogramm 63, 64 vollständig entleert ist, also der Initialzustand wiederhergestellt ist.

Anstatt das Fenster 20 ganz aus dem Bild 10 heraus laufen zu lassen, kann alternativ auch ein Reset durchgeführt werden, bei dem alle Speicherstellen auf 0 gesetzt werden, sobald der Histogramminhalt nicht mehr für einen Verifikationsschritt benötigt wird.

Nachdem eine Zeile fertig bearbeitet ist, kann der gleiche Vorgang beispielsweise in der nächsten Zeile durchgeführt werden. Der Prozess ist auch parallelisierbar.

Figur 5 zeigt eine spezielle Variante für die Abarbeitung des Bildes 10 mit Richtungswechseln des gleitendes Fenster 20 jeweils am Rand des Bildes 10 rechts und links.

Die Richtung des Gleitens oder Verschiebens kann also auch gewechselt werden, z.B. jeweils wenn das Referenzpixel 1, 26 einen Rand des Bildes 10 erreicht hat. Zum Beispiel würde von links nach rechts beginnend das Fenster 20 nach rechts verschoben, bis das Referenzpixel 1, 26 den Rand berührt, aber noch im Bild 10 liegt. Dann würde man das Fenster 20 z.B. um ein Pixel nach unten verschieben, den Update-Prozess also ausnahmsweise für die Breitseite durchführen. Danach würde man das Fenster 20 in der zur vorigen Richtung entgegengesetzten Richtung, also von rechts nach links laufen lassen, bis das Referenzpixel 1, 26 den linken Rand des Bildes 10 erreicht, erneut um ein Pixel nach unten verschieben und wieder die Richtung wechseln usw.

Das Histogramm würde zwischendurch im Allgemeinen nicht den Initialzustand erreichen. Diese stellt aber kein Problem dar, sondern sogar einen Vorteil, da weniger Daten ein- und ausgetragen werden müssen.

### Histogrammdaten (Ausführungsbeispiel)

Figur 6 zeigt eine typische Momentaufnahme der Histogramme 63 und 64 für die Komponenten u bzw. v, die hier mit einer Auflösung (Intervallbreite) von 1 Pixel implementiert sind. Es ist zu erkennen, dass sich Peaks 65 ausbilden, die die dominante Bewegung innerhalb des Fensters 20 darstellen. Je nach Auflösung des Histogramms verteilt sich der Peak 65 meistens über ein oder wenige Bins.

In Figur ist konkret eine Momentaufnahme des Inhalts der beiden eindimensionalen Histogramme 63 und 64 für die horizontale (Histogramm 63) und vertikale Bewegungskomponente (Histogramm 64) u bzw. v dargestellt.

Teilweise existieren auch zwei oder mehrere dominante Bewegungen innerhalb des Fensters 20, z.B. wenn in der Anwendung mit dem Fenster 20 zur Hälfte mit einem Fußgänger im Vordergrund eines Bildes und zur anderen Hälfte mit dem Hintergrund des Bildes korrespondiert, dort überdeckt und die Hälften unterschiedliche Bewegungen im Bild aufweisen. Dann findet man im Histogramm dann im Allgemeinen entsprechend mehrere Peaks 65, die diese mehreren Bewegungen repräsentieren.

Außerhalb des oder der dominanten Peaks 65 sind die Histogramm-Bins mit Null oder kleinen Werten befüllt. Diese kleinen Werte sind meistens von Ausreißern hervorgerufen.

Somit ist die Repräsentation mit Histogrammen 63, 64 gut geeignet, um die dominante und damit wahrscheinlich korrekte Bewegung zu trennen von den Ausreißern, die eher statistisch verstreut auftreten.

### Gewichtete Histogramme

In einem klassischen Histogramm 63, 64 werden Ereignisse gezählt. Wie bereits angesprochen, kann es aber von Vorteil sein, die Hypothesen [u, v] nicht mit jeweils identischem Gewicht 1 zu berücksichtigen, sondern mit unterschiedlichen, individuellen Gewichten. Somit kann z. B. ein Maß für das Vertrauen in die jeweilige Hypothese berücksichtigt werden.

Beispielsweise könnte ein hier nicht näher betrachteter Algorithmus zu jeder Hypothese auch ein individuelles Gütemaß, Vertrauensmaß, Gewicht, oder ähnlich angeben.

Ein solches Maß kann bei der Eintragung ins Histogramm 63, 64 berücksichtigt werden, indem der Histogrammzähler durch eine Gewichtssumme ersetzt wird. Dazu muss ein entsprechender Wertebereich vorgesehen sein. Es ist dabei von Vorteil, im gleitenden Histogramm weiterhin mit ganzzahligen Werten oder Fixkommazahlen zu arbeiten, nicht mit Gleitkommazahlen. Denn es sollte möglichst sichergestellt werden, dass es bei der fortlaufenden Addition und Subtraktion nicht zu Abweichungen durch sich nicht aufhebende Rundungsfehler kommt. Diese Gefahr würde bei Gleitkommazahlen bestehen. Eine eventuell notwendige Rundung sollte vorab vorgenommen werden, damit beim gleitenden Histogramm 63, 64 sichergestellt ist, dass das eingetragene Gewicht später wieder ausgetragen wird, ohne dass ein durch Rundung entstandener Rest verbleibt.

Beim gewichteten Histogramm 63, 64 wird der Summenzähler, der die Anzahl der aktuell eingetragenen Hypothesen angibt, zu einem Summengewichtszähler, der die Summe der Gewichte der aktuell eingetragenen Hypothesen angibt.

### Verifikationsschritt

Nachdem, wie oben beschrieben, das Update durchgeführt wurde und der Inhalt der Histogramme 63, 64 die Bewegungshypothesen repräsentiert, die sich unter dem gegebenen Fenster 20 befinden, kann für die Hypothesen an der Referenzposition und gegebenenfalls in einer kleinen Umgebung um diese herum der Verifikationsschritt durchgeführt werden.

Beim Verifikationsschritt wird geprüft, ob für die jeweils betrachtete Hypothese ausreichende Unterstützung aus der Nachbarschaft vorhanden ist, wobei die Nachbarschaft durch die Größe und Lage des Fensters 20 in Bezug auf die Referenzposition 1, 26 festgelegt ist.

Diese Hypothesen aus dieser Nachbarschaft haben anschaulich gesprochen also wie bei einer Wahl ihre Stimmen abgegeben und jeweils für eine bestimmte Bewegung abgestimmt, und zwar komponentenweise in zwei eindimensionalen Histogrammen 63, 64 oder vektorweise in einem zweidimensionalen Verbundhistogramm.

Für die zu verifizierende Hypothese wird dann beispielsweise geprüft, ob sie von einer Mehrheit unterstützt wird oder ob es zumindest eine ausreichend hohe Unterstützung gibt.

Bei zwei eindimensionalen Histogrammen 63, 64 wird diese Überprüfung einzeln pro Komponente durchgeführt und das Ergebnis kombiniert, z.B. indem das schlechtere der beiden Ergebnisse herangezogen wird oder indem die beiden Ergebnisse in anderer Weise miteinander verknüpft werden, beispielsweise durch Addition.

Der Schritt des Überprüfens kann dabei wie nachfolgend beschrieben aussehen, wobei sich die Überprüfung auf einen Hypothesenvektor bezieht, der z.B. der markierten Position 1, 26 in Figur 2 oder Figur 3 zugeordnet ist, und also insbesondere folgende Schritte aufweisen:
- Zerlegung des Hypothesenvektors in seine Komponenten (entfällt beim Verbundhistogramm)
- Lesender Zugriff im jeweiligen Histogramm 63, 64 an der Stelle 1, 16, die der Bewegung(skomponente) der Hypothese entspricht. Wenn z.B. die u-Komponente der Hypothese -1,7 Pixel beträgt, würde man das Histogramm mit Intervallbreiten von 1 Pixel an der Stelle auslesen, die für u = -2 steht, optional auch an der Stelle für u = -1, weil der Wert -1,7 zwischen u = -2 und u = -1 liegt.
- Optional kann das Histogramm 63, 64 auch an weiteren in der Nähe liegenden Stellen ausgelesen werden, z.B. hier an den Stellen -3 und 0. Bei einem Verbundhistogramm würde man einen kleinen, z.B. quadratischen, Ausschnitt in der Nähe auslesen.
- Die ausgelesenen Werte, die Zählern oder Gewichten entsprechen, werden dann zusammengefasst, z.B. addiert oder gewichtet addiert, um einen Bewertungswert zu ermitteln.
   Die Gewichte können in Abhängigkeit vom (gerundeten oder nicht gerundeten) Wert der Hypothese gewählt werden. Z.B. beim oben genannten Wert -1,7 könnte man die Gewichte 0,7 und 0,3 für die bei u = -2 und u = -1 ausgelesenen Histogrammeinträge anwenden. Der Histogrammeintrag bei u = -2 würde also stärker gewichtet, weil -1,7 näher an -2 liegt als an -1. Alle Gewichtungen können bevorzugt auch mit ganzzahligen Werten - z.B. Fixpunktdarstellung - vorgenommen werden.
- Dieser Bewertungswert stellt eine erste Bewertung für die Hypothese dar. Je höher diese Bewertung ist, umso deutlicher ist die Bestätigung aus der Nachbarschaft für die vorliegende Bewegung. Bei einem Ausreißer wäre der Wert gering.
   Bei zwei eindimensionalen Histogrammen würden zwei Bewertungswerte entstehen, die kombiniert werden können, z. B. durch Betrachtung des Minimums oder der Summe.
- Dieser gegebenenfalls kombinierte Bewertungswert kann mit einer Schwelle verglichen werden, um zu entscheiden, ob die Hypothese aufgrund ausreichender Unterstützung aus der histogrammbasierten Bewertung vertrauenswürdig ist oder nicht.
   Alternativ oder ergänzend kann der Bewertungswert auch - gegebenenfalls in quantisierter oder codierter Form - an die Hypothese als Zusatzinformation angehängt und weitergereicht werden, z. B. um an späterer Stelle ausgewertet oder an einer Schnittstelle bereitgestellt zu werden.
- Statt eine absolute Schwelle zu verwenden, kann alternativ oder ergänzend auch eine relative Schwelle betrachtet werden. Z.B. kann der Summenzähler oder Summengewichtszähler herangezogen werden, um festzustellen, wie groß der Anteil der Hypothesen aus der Nachbarschaft ist, die die gerade betrachtete Hypothese unterstützen.
- Bei der histogrammbasierten Abstimmung kann es sinnvoll oder gewollt sein, die jeweils eigene Stimme unberücksichtigt zu lassen, so dass eine Hypothese nicht für sich selbst stimmen kann. Dies ist problemlos möglich, indem beim Auslesen des entsprechenden jeweiligen Histogramm-Bins und des Summenzählers oder Summengewichtszählers das eigene Gewicht jeweils subtrahiert wird.

Alternativ oder zusätzlich kann auch die Peakposition zur Verifikation eines Hypothesenvektors herangezogen werden:
- Aus dem Histogramm 63, 64 bzw. den Histogrammen 63, 64 kann zu jedem Zeitpunkt eine dominante Bewegung ermittelt werden, z. B. indem festgestellt wird, welcher Bewegung der dominante Peak entspricht. Welchem Bin der dominante Peak zuzuordnen ist, kann z. B. folgendermaßen festgelegt sein:
- durch das Bin mit dem größten Gewicht,
- durch das Bin, das zusammen mit einem seiner Nachbar-Bins, die jeweils kleineres oder gleiches Gewicht haben, in Summe das größte Gewicht von allen solchen Bin-Paaren trägt,
- durch das Bin, für das bei gewichteter Mittelung über eine vordefinierte Nachbarschaft von Bins das größte Gewicht ermittelt wird (implementierbar z. B. mittels Faltung des Histogramms z.B. mit symmetrischen Koeffizienten [c2, c1, c0, c1, c2] mit c0 ≥ c1 ≥ c2 ≥ 0).

Die beiden zuletzt genannten Punkte stellen Glättungsmaßnahmen dar, die in der Praxis zu einer stabileren Peakselektion führen und daher zu bevorzugen sind.
- Die Ermittlung der dominanten Peak-Position kann auf unterschiedliche Weise erfolgen:
   - Volle Suche über das jeweilige Histogramm 63, 64: Diese Methode findet immer den dominanten Peak, erfordert aber einen höheren Aufwand, da das gesamte Histogramm ausgelesen wird.
   - Inkrementelle Suche: Nach jeder Änderung des Histogramminhalts oder nach einer Anzahl von Änderungen oder nach einer gewissen Zeit wird geprüft, ob der dominante Peak "weiter gewandert" ist, z.B. um eine Bin-Position nach links oder rechts oder um wenige Binpositionen. Für diese Prüfung ist nur ein geringer Aufwand nötig.
   - Prüfung der dominanten Peakposition nach Histogrammupdate: Für jedes Bin, das geändert wird, wird geprüft, ob die dominante Peakposition inzwischen dort (oder ggf. in unmittelbarer Nähe) liegt.
   - Vergleich des dem potenziell dominanten Peak zugeordneten Gewichts mit dem Summengewicht. Solange das Verhältnis größer als 1/2 ist, ist die Dominanz bestätigt. Dieser Test ist in Beispielen wie in Figur 5 gezeigt meistens erfolgreich.
   - Durch eine Kombination der zuletzt genannten Methoden ist die volle Suche in der Praxis nur selten oder gar nicht mehr nötig.
- Neben der "ersten" dominanten Peakposition kann auch noch eine zweite bzw. zweitbeste Peakposition ermittelt werden, ggf. eine dritte usw. Das ist von Vorteil und praktischer Relevanz, insbesondere wenn sich mehrere dominante Bewegungen innerhalb des Fensters 20 befinden.
- Bei der Überprüfung einer Hypothese wird berücksichtigt, ob bzw. wie nahe sie sich an der dominanten Peakposition oder an einem der dominanten Peakppositionen befindet.
   Beispielsweise könnte verlangt werden, dass beide Komponenten der Hypothese nicht weiter als 3 Bins von einem Peak im jeweiligen Histogramm 63, 64 entfernt sind, um die Hypothese zu akzeptieren.
   Alternativ oder zusätzlich könnte ein Gütemaß an die Hypothese angehängt werden, das eine Aussage darüber beinhaltet, wie gut die Hypothese durch die dominante Bewegung (oder eine der dominanten Bewegungen) gestützt wird.

Die Ergebnisse der mehrheitsbasierten Verifikation von Korrespondenzen haben ein typisches "Aussehen", z.B. wenn man Ergebnisse farblich visualisiert, wie dies eingangs erwähnt wurde.

Dies trifft insbesondere in den Grenzbereichen zu, wenn das Verfahren auf schwierigen Daten angewandt wird, z.B. bei schwachen Signal-zu-RauschVerhältnis oder bei Bewegungsunschärfe oder bei Verdeckung usw. An der Art der Degradation und einigen charakteristischen Eigenschaften ist das Verfahren gut zu erkennen, zum Beispiel
- an der Bildung von Clustern von Ergebnissen aufgrund gegenseitiger Bestätigung von Hypothesen,
- an scharfen Sprüngen an Objektkanten (keine Verschmierungen) auf Grund eines Wechsels von einem dominanten Peak 65 auf einen anderen dominanten Peak 65 und/oder
- an der guten Wirksamkeit beim Vergleich von Input und Output in dem Sinne, dass fast keine Ausreißerhypothesen übrig bleiben.

Weiterhin sind die Zugriffsmuster auf den Speicher und Zwischenspeicher sehr charakteristisch, wenn das Fenster 20 über das Bild 10 von Hypothesen gleitet, wie dies im Zusammenhang mit Figur 2 gezeigt ist.

Die Erfindung eignet sich z.B. für die Implementierung auf CPUs, FPGAs und als ASIC oder ASIC IP und kann auf allen Plattformen implementiert werden.

Die Methode des optischen Flusses, auch Optical-Flow-Verfahren (OF) genannt, ist ein Verfahren zur Bewegungsanalyse mit oder bei Computer-Vision-Verfahren.

Ein Kamerasensor kann Bilder erzeugen, die projizierte 2D-Punkte der 3D-Welt enthalten. Beim OF werden Bilder, die zu unterschiedlichen Erfassungszeiten aufgenommen wurden, analysiert und es werden so genannte Korrespondenzen für diejenigen Punkte aufgebaut, deren Koordinaten bei beiden Bildern lokalisiert werden können. Ein Korrespondenzvektor verbindet die Koordinaten eines Pixels im ersten Bild mit den Koordinaten des gleichen 2D-Punktes im zweiten Bild. Beim optischen Fluss wird der Korrespondenzvektor auch Flussvektor genannt.

Das oben beschriebene Verfahren beschreibt die Vorgehensweise zur Erkennung und Bestätigung oder Ablehnung von Ausreißern eines Hypothesenbildes 10.

Das nachfolgend beschriebene Vorgehen erörtert als zusätzlichen Aspekt die Möglichkeit der Beschleunigung bei dem oben beschriebenen grundsätzlichen Verfahren, um eine Echtzeitverarbeitung während des Verifizierungsprozesses zu erreichen oder um den Rechenaufwand für den Verifizierungsprozess zu verringern. Dabei wird der oben beschriebene Verifizierungsprozess modifiziert, was auch zu unterschiedlichen Ergebnissen führen kann. Der Unterschied in den Ergebnissen ist dabei so gering, dass er in der praktischen Anwendung nicht zu relevanten Nachteilen führt.

Die hier beschriebenen Verfahren können z.B. bei der Umsetzung von Computer-Vision- ASICs dienen.

Ein Fahrerassistenzkamerasystem muss bei einem Verarbeitungsdurchsatz von z.B. 60 FullHD-Bildern pro Sekunde einen geringen Stromverbrauch von höchstens wenigen Watt erreichen, um ein automatisches Interventionssystem zu ermöglichen, z.B. eine Notbremsassistenzfunktion. Bei solchen Kamerasystemen reicht die Speicherbandbreite nicht aus, um eine histogrammbasierte Verifikation über jede Korrespondenzhypothese durchzuführen. Die Größe des Bildbereichs, in dem das Histogramm 63, 64 berechnet werden muss, bestimmt den Rechenaufwand bzw. die Zeit für die Verarbeitung des Algorithmus. Für große Bereiche oder Regionen könnte die benötigte Zeit für die Aktualisierung des Histogramms und für die Analyse des Inhalts ein System beeinträchtigen, Bilder B1, B2 in Echtzeit auf einem eingebetteten System zu verarbeiten. In dem Fall, dass die Region klein ist, ist der Peak der Histogramme 63, 64 möglicherweise nicht stark genug ausgeprägt, um zuverlässig die Unterscheidung von Ausreißern und korrekten Hypothesen zu ermöglichen.

Die vorliegende Erfindung beschleunigt das Verfahren zur der Ablehnung bzw. Verifikation von Ausreißern und ermöglicht es, Echtzeitanwendungen wie eine Notbremsassistenzfunktion auf einem eingebetteten System zu erreichen.

Die nachfolgend beschriebenen Aspekte verringern die Verarbeitungszeit einer histogrammbasierten Prozedur zur Verifikation der Korrespondenzvektorhypothese unter Verwendung des Inhalts des aktuell in einem Speicher vorliegenden Histogramms 63, 64, wobei mehrere Hypothesen parallel überprüft werden.

In der folgenden Beschreibung wird davon ausgegangen, dass der erste Schritt zur Bestimmung der Korrespondenzen bereits durchgeführt wurde, so dass ein Bild 10 mit Korrespondenzhypothesen, das überprüft werden muss, in einer Speichereinrichtung zur Verfügung steht. Es wird davon ausgegangen, dass dieses Bild 10 gültige Elemente und Ausreißer enthält. Gültige Elemente, die auch als Inlier bezeichnet werden, stellen typischerweise die wahre Bewegung dar, während Ausreißer falsche Korrespondenzen sind. Nur diese müssen abgelehnt und die anderen, also ersteren, bewahrt werden. Dies ist typischerweise der letzte Verarbeitungsschritt, so dass seine Ausgabe das Korrespondenzvektorbild 100 ist, wobei Korrespondenzvektoren beispielsweise optische Flussvektoren sein können. Eine Eigenschaft der Ausreißer ist, dass sie zufällig verteilt sind, während die Inlier eine räumliche Unterstützung durch benachbarte Pixel haben. Aus diesem Grund ist eine auf Histogramme 63, 64 basierende Verifikation eine gute Wahl, da die Inlier zu lokalen oder globalen Peaks 65 eines Histogramms 63, 64 gehören.

Es wird auch angenommen, dass ein Speicher verwendet wird, um die Werte der Histogrammbins für einen gegebenen Bereich zu speichern. Es gibt mehrere Möglichkeiten, die Werte eines Gleitfensterhistogramms in einem elektronischen Gerät zu speichern. Eine Möglichkeit besteht darin, die Build-Speicher innerhalb einer IP mit Bit-Speicherzellen, z.B. Flip-Flops zu verwenden. Diese haben die Möglichkeit, auf alle Bins des Histogramms in nur einem Taktzyklus zuzugreifen, aber ihre Kosten sind zu hoch, um auf einem Produkt berücksichtigt zu werden.

Ein weiterer Ansatz ist, den In-Chip- oder Off-Chip-Speicher mit benutzerdefinierten Eingabe- und Ausgabeports zu verwenden. Diese Speicher haben eine begrenzte Anzahl von Ports, um die Werte zu lesen und zu speichern. Bei der Gestaltung eines elektronischen Systems mit entsprechendem Speicherbedarf ist ein Kompromiss zwischen der Größe des notwendigen Halbleiterbereichs (je mehr Fläche hat einen hohen Einfluss auf die Kosten) und der Leistung zu finden. Die Speicher können aus Single-Port (nur eine Lese- oder Schreiboperation pro Taktzyklus) oder Dual- bis Quad-Port-Speichern (mit zwei, drei oder vier Leseoperationen und nur einer Schreiboperation im gleichen Taktzyklus) gewählt werden. Da die Quad-Port-Speicher in allen elektronischen Geräten nicht verfügbar sind und deren Flächenverbrauch höher ist, sind die Dual-Port-Speicher am häufigsten für Anwendungen, bei denen ein hoher Durchsatz erforderlich ist.

Bei der oben beschriebenen Verifikationsmethode wird ein Ansatz mit gleitendem Fenster 20 für die Zurückweisung von Ausreißern des OF verwendet. Es reduziert die Datenübertragungen aus dem Speicher, der das Korrespondenzhypothesenbild 10 enthält, in den Speicher, der das Histogramm 63, 64 enthält, da das Histogramm 63, 64 nicht immer neu erstellt werden muss. Lese- und Schreiboperationen auf dem Histogrammspeicher werden auf das Doppelte der Anzahl der Zeilen in dem Bereich reduziert, in dem das Histogramm 63, 64 berechnet wird. Als Beispiel ist in Figur 7 ein rechteckiges gleitendes Fenster mit einer Höhe von 9 Zeilen gezeigt. Vereinfachend wird für die nachfolgende Betrachtung angenommen, dass pro Pixel genau eine Hypothese vorliegt - in Wirklichkeit können pro Pixel auch mehrere oder gar keine Hypothese vorliegen - und dass jede Hypothese mit Gewicht 1 beiträgt.

Dann dauert die Aktualisierung eines Histogramms auf Grund der Höhe von 9 Zeilen 18 Taktzyklen, da auf 18 Adressen zugegriffen werden muss. Die 9 Bins der neuen Spalte, die in das Histogramm 63, 64 eintreten, müssen inkrementiert werden, und die 9 Bins der alten Spalte, die das Histogramm 63, 64 verlassen, müssen dekrementiert werden.

Nach dem Aktualisieren des Histogramms 63, 64 ist der nächste Schritt zu erkennen, ob die aktuelle Korrespondenzhypothese zu einem Peak 65 im Histogramm gehört. Dies geschieht durch den Zugriff auf einige der benachbarten Bins oder Histogrammintervalle, gefolgt von dem Vergleich zwischen den Werten dieser Bins. Da die Aktualisierung und die Auswertung des Histogramms 63, 64 für das gesamte Korrespondenzhypotheseneingangsbild 10 erfolgen müssen, ist die Echtzeitverarbeitung des oben beschriebenen Vorgehens für große Bilder auf Grund der begrenzten Speicherbandbreite in einem eingebetteten Gerät nicht möglich.

Diese Erfindung schlägt zusätzlich drei Verfahren vor, um die Verifikation von Korrespondenzhypothesen zu beschleunigen.

Die erste Beschleunigungsmethode besteht darin, Taktzyklen während der Auswertung des Histogramms 63, 64 einzusparen. Der Speicher, der das Histogramm 63, 64 speichert, wird dabei derart organisiert, dass ein Taktzyklus ausreicht, um den Wert des aktuellen Mittelpixels und bis zu vier seiner benachbarten Bins oder Histogrammintervalle zu erhalten. Dies ist in Figur 8 gezeigt. Die Leseadresse muss durch Addition oder Subtraktion eines zu dem im mittleren oder zentralen Pixel gespeicherten Wertes berechnet werden. Zum Beispiel, indem man acht Histogrammbins in einer Adresse gruppiert, können bis zu acht benachbarte Bins in nur einem Zyklus gelesen werden. In Anbetracht der Tatsache, dass das mittlere Pixel des Histogramms 63, 64 beispielsweise der Bin-Nummer 11 zugeordnet ist, müssen die Leseadressen als Adressnummer 0 für den ersten Port und die Adressnummer 1 an den zweiten Port gesetzt werden. Beide Ports zusammen enthalten insgesamt 16 Bins, von der Bin-Nummer 0 bis zur Bin-Nummer 15. Der erste Lese-Port liefert das vierte Bin (Bin-Nummer 7) auf der linken Seite des aktuellen Zentrums (Bin-Nummer 11).

Der zweite Port enthält die anderen drei Bins nach links (Bins 8 bis 10) und die anderen vier Bins auf der rechten Seite (Bin 12 bis 15).

Die zweite Beschleunigungsmethode verringert die Gesamtzeit der Verarbeitung des gesamten Korrespondenzhypothesenbildes, indem der Inhalt des Histogramms 63, 64 für die Verifikation von N Korrespondenzhypothesen parallel verwendet wird, anstatt wie im ursprünglichen Vorschlag nur eine Korrespondenzhypothese zu verifizieren. Eine leichte Asymmetrie entsteht dann, weil sich nicht alle Hypothesen in der Mitte des Fensters 20 befinden können (das z.B. 9 Zeilen hoch in Figur 7 war), für das das Histogramm 63, 64 berechnet wird. Um diese Asymmetrie teilweise zu kompensieren, kann die Anzahl der Zeilen erhöht werden, bevorzugt um N-1 Zeilen. Obwohl das Erhöhen der Anzahl von Zeilen die Zeit für die Aktualisierung und Auswertung des Histogramms 63, 64 erhöht, wird die Gesamtzeit, um ein vollständiges Korrespondenzhypothesenbild 10 zu verifizieren, reduziert, da mit einem Histogrammbefüllungszustand N Hypothesen zugleich verifiziert werden können.

In diesem Beispiel steht einer Erhöhung des Aufwandes um den Faktor (8+(N-1)) / 9 = (8+N) / 9 auf Grund der Zeilenzahlerhöhung eine Verringerung um den Faktor N entsprechend der Anzahl der Histogrammupdates entgegen. Insgesamt ist in diesem Beispiel also ein Faktor (8+N) / (9N) zu betrachten, um den die Verarbeitungszeit des Algorithmus verringert wird.

Andererseits führt die Asymmetrie jedoch auch zu leicht veränderten Ergebnissen im Vergleich zum oben beschriebenen nicht beschleunigten erfindungsgemäßen Ansatz.

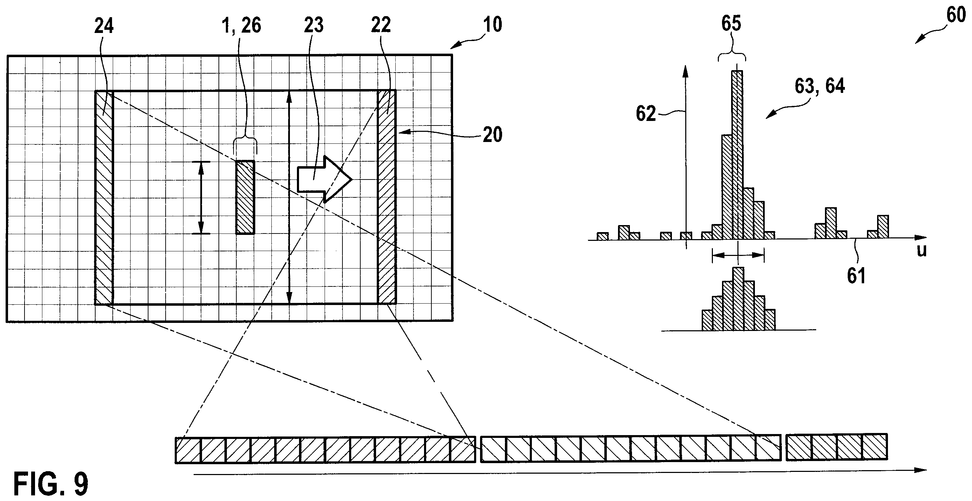

Damit die Ergebnisse auf Grund der Asymmetrie nicht zu stark verändert werden, hat sich ein Wert von N = 4 als guter Kompromiss hinsichtlich Qualität der Ergebnisse und Bearbeitungszeit erwiesen. Bei N = 4, wie in Figur 9 gezeigt, weist das gleitende Fenster 20 zwölf Zeilen auf und die Histogrammaktualisierung und -auswertung kann in 24 + 4 Taktzyklen durchgeführt werden, was zu einem Durchsatz von 28 Taktzyklen für die Verifikation von 4 Eingangskorrespondenzhypothesen führt. Der daraus resultierende Durchsatz von 7 Taktzyklen pro Eingangskorrespondenzhypothese ermöglicht eine Echtzeitverarbeitung des oben beschriebenen Verfahrens oder Algorithmus' auch bei FullHD-Bildern und bei niedrigen Taktfrequenzen, die für eine geringe Leistungsaufnahme an einem eingebetteten Gerät benötigt werden.

Die dritte Beschleunigungsmethode basiert auf einer Verringerung der Zeit, die für die Aktualisierung des Histogramms 63, 64 benötigt wird, die insbesondere dann vorteilhaft angewendet werden kann, wenn das Hypothesenbild 10 spärlich besiedelt ist. Dann enthalten viele der eingehenden und ausgehenden Hypothesenspeicher keine Information, um das Histogramm 63, 64 zu aktualisieren. Diese Eigenschaft kann ausgenutzt werden, um die Anzahl der Zeilen für die Aktualisierung des Histogramms 63, 64 auf eine feste Zahl zu reduzieren, die kleiner ist als die Gesamtzahl der Zeilen des gleitenden Fensters 20. Zum Beispiel könnte unter Berücksichtigung des gleitenden Fensters 20, bei dem zwölf Zeilen verwendet werden, um das Histogramm 63, 64 zu aktualisieren, die Anzahl zu betrachtender Korrespondenzhypothesen von zwölf auf sechs limitiert werden, um die Anzahl der dafür erforderlichen Taktzyklen entsprechend ebenfalls auf die Hälfte zu reduzieren. Im unwahrscheinlichen Fall, dass mehr als sechs Hypothesen zur Verfügung stehen, um zum Update beizutragen, müssen die restlichen übersprungen werden. Für diesen Fall muss also eine Prioritätsreihenfolge definiert werden.

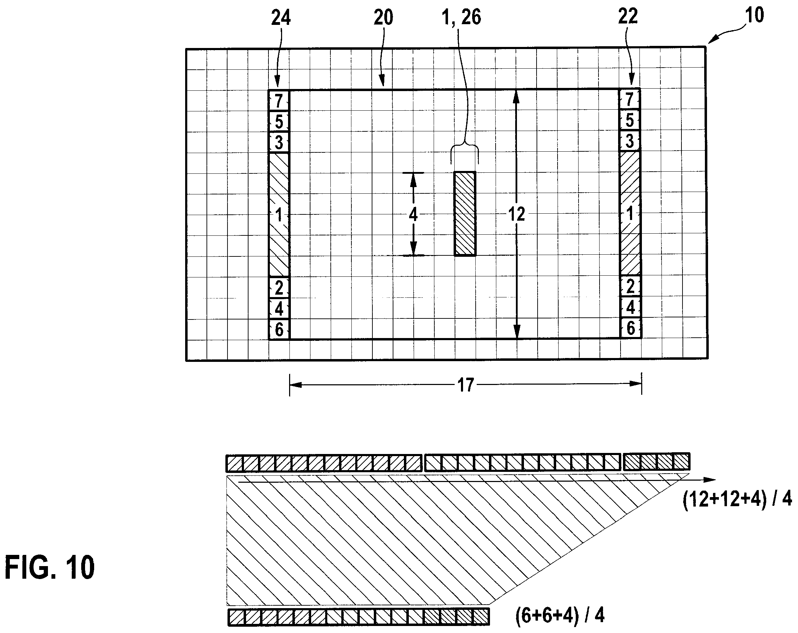

Eine Reihenfolge, nach dem Vorhandensein zu suchen und Hypothesen für die Histogrammaktualisierung zu lesen, ist in der Figur 10 dargestellt. Die sechs mit 1 nummerierten Pixel haben die höchste Priorität und werden immer gelesen. Wenn einige dieser Pixel keine Korrespondenzhypothese enthalten, sind die nächsten Pixel zu lesen, die mit 2, 3, usw. nummeriert sind, und zwar bis maximal sechs Korrespondenzhypothesen gelesen sind. Es ist empirisch bewiesen, dass die Aktualisierung des Histogramms 63, 64 auf diese Weise eine ähnliche Ergebnisqualität erreicht wie das Aktualisieren des Histogramms ohne Überspringen der restlichen Hypothesen.

Unter Berücksichtigung der drei Beschleunigungsverfahren und eines gleitenden Fensters 20 mit einer Höhe von zwölf Reihen, kann die benötigte Zeit zur Verifikation einer Korrespondenzhypothese von dreißig Taktzyklen auf nahezu vier Taktzyklen reduziert werden, wodurch eine Echtzeitausführung des Verfahrens oder Algorithmus' in einer eingebetteten Vorrichtung mit z.B. 60 FullHD-Bildern pro Sekunde erreicht wird.

## Patentansprüche

1. Computer-implementiertes Verfahren (S) zur Bewertung von Bildern (B1, B2) und zur Erkennung von Ausreißern in optischen Flussvektoren, mit:
- Bereitstellen (S1) von Korrespondenzhypothesen ([u, v]) in einer korrespondierenden Hypothesenmatrix (10), wobei die Korrespondenzhypothesen ([u, v]) optische Flussvektoren zwischen jeweils als korrespondierende Bildmatrix gegebenen ersten und zweiten Bildern (B1, B2) darstellen,
- Bewerten (S2) der Hypothesenmatrix (10) und bedingtes Verifizieren (S3) der Korrespondenzhypothesen ([u, v]),
- Bereitstellen (S4) verifizierter Bildkorrespondenzhypothesen ([u, v]) als Bildkorrespondenzen in einer Korrespondenzmatrix (100) als Bewertungsergebnis, und
- Erkennen und Ablehnen von Ausreißern der optischen Flussvektoren aufgrund der verifizierten Bildkorrespondenzhypothesen ([u, v]);
wobei das Bewerten (S2) der Hypothesenmatrix (10) erfolgt, indem für jedes Element (1) der Hypothesenmatrix (10) unter Verwendung eines gleitenden Fensters mindestens ein Histogramm (63, 64) bezüglich der Komponenten (u, v) der Korrespondenzhypothesen ([u, v]) gebildet (S2-1) und bewertet (S2-2) wird,
bei welchem das Bilden (S2-1) des mindestens einen Histogramms (63, 64) für ein gegebenes jeweiliges Element (1) der Hypothesenmatrix (10) erfolgt, indem die jeweiligen Komponenten (u, v) der Korrespondenzhypothesen ([u, v]) für Elemente (11) im Inneren eines gleitenden Fensters summiert oder gewichtet summiert werden, wobei
das gleitende Fenster ein Rechteck, ein Polygon, ein Oval, eine Ellipse oder ein Kreis ist,
wobei beim Bewerten (S2-2) eines Histogramms (63, 64) für ein gegebenes jeweiliges Element (1) der Hypothesenmatrix (10) ein Bewertungswert erzeugt wird, indem ein oder mehrere Werte des mindestens einen Histogramms (63, 64) in einem Histogrammintervall zu der dem gegebenen Element (1) zugeordneten mindestens einen Komponente (u, v) ausgelesen und summiert oder gewichtet summiert werden, und
bei welchem beim Verifizieren (S3) eines jeden Elements (1) der Hypothesenmatrix (10) ausgewertet wird, ob der Bewertungswert einen lokalen oder globalen vorgegebenen Schwellenwert zumindest erreicht.

2. Verfahren (S) nach Anspruch 1,
bei welchem beim Bewerten (S2) und insbesondere beim Bilden (S2-1) von Histogrammen (63, 64) sämtliche Elemente (1) der Hypothesenmatrix (10) erfasst werden, insbesondere durch eine jeweilige Umgebung oder ein jeweiliges Fenster (20),
- welche für sämtliche Elemente (1) der Hypothesenmatrix (10) hinsichtlich Form und/oder Ausdehnung identisch sind, oder
- welche als gleitende Umgebung bzw. als gleitendes Fenster (20) ausgebildet sind.

3. Verfahren (S) nach einem der vorangehenden Ansprüche, bei welchem beim Bewerten (S2-2) eines Histogramms (63, 64) für ein gegebenes jeweiliges Element (1) der Hypothesenmatrix (10) auf der Grundlage des Histogramms (63, 64) ein Bewertungswert erzeugt wird, wobei
- zusätzlich ein oder mehrere Werte aus ein oder mehreren dem zugeordnete Histogrammintervall benachbarten Histogrammintervallen oder aus einer Umgebung benachbarter Histogrammintervalle berücksichtigt werden.

4. Verfahren (S) nach einem der vorhergenden Ansprüche,
bei welchem beim Verifizieren (S3) einer Korrespondenzhypothese [(u, v)] zu einem jeweils gegebenen Element (1) der Hypothesenmatrix (10) oder einer Komponente (u, v) davon eine zugeordnete und verifizierte Korrespondenz oder eine Komponente davon jeweils durch einen Bewertungswert festgelegt und vorzugsweise als solche als korrespondierendes Element in die Korrespondenzmatrix (100) eingetragen wird.

5. Verfahren (S) nach einem der vorangehenden Ansprüche,
bei welchem zur Beschleunigung und/oder zur Reduktion des Verarbeitungsaufwandes des Bewertens (S2) der Hypothesenmatrix (10) und/oder des bedingten Verifizierens (S3) der Korrespondenzhypothesen ([u, v]) ein jeweils aktuell erzeugtes Histogramm (63, 64), welches insbesondere in einem Histogrammspeicher gespeichert wird, zum parallelen und/oder seriellen Verifizieren mehrerer Korrespondenzhypothesen ([u, v]) verwendet wird.

6. Verfahren (S) nach Anspruch 5,
bei welchem der Histogrammspeicher so organisiert wird, dass ein zu Grunde liegender Taktzyklus ausreichend ist, um den Wert zu einem jeweils aktuellen Element (1) der Hypothesenmatrix (10) aus dem Histogramm (63, 64) sowie Werte zu einem oder zu mehreren weiteren Intervallen des Histogramms (63, 64) auszulesen, wobei insbesondere (i) eine zu Grunde liegende Leseadresse berechnet wird durch Addieren oder Subtrahieren des Wertes 1 in Bezug auf den zum aktuellen Element (1) in der Hypothesenmatrix auf (10) gespeicherten Wert und/oder (ii) durch Clustern von Intervallen des Histogramms (63, 64), insbesondere in Bezug auf einen Dualport des zu Grunde liegenden Histogrammspeichers.

7. Verfahren (S) nach einem der vorangehenden Ansprüche,
bei welchem zur Beschleunigung des Bewertens (S2) der Hypothesenmatrix (10) und/oder des bedingten Verifizierens (S3) der Korrespondenzhypothesen ([u, v])
- das bedingte Verifizieren (S3) parallel und/oder gleichzeitig für eine Mehrzahl von Korrespondenzhypothesen ([u, v]) zu einer entsprechenden Mehrzahl von Elementen (1) der Hypothesenmatrix (10) durchgeführt wird und/oder
- nicht sämtliche Elemente (11) der Hypothesenmatrix (10) im Inneren einer Umgebung des jeweils gegebenen Elements (1) und insbesondere des zu Grunde liegenden gleitenden Fensters (20) beim Aktualisieren eines Histogramms (63, 64) berücksichtigt werden, sondern höchstens eine vorgesehene Anzahl, wobei eine von der Position im Fenster (20) abhängige Prioritätsreihenfolge festlegt, in welcher Reihenfolge die Elemente (11) der Hypothesenmatrix (10) im Inneren einer Umgebung des jeweils gegebenen Elements (1) vorrangig berücksichtigt werden.

8. Vorrichtung zur Bewertung von Bildern (B1, B2) und zum Bewerten von Korrespondenzhypothesen ([u, v]) von Bildern (B1, B2),
- welche eingerichtet ist ein Verfahren nach einem der Ansprüche 1 bis 7 auszuführen und
- welche insbesondere als ASIC, als frei programmierbare digitale Signalverarbeitungsvorrichtung oder als Kombination davon ausgebildet ist.

9. Computerprogramm, umfassend Befehle, die bei der Ausführung des Programms durch einen Computer diesen veranlassen, das Verfahren (S) nach einem der Ansprüche 1 bis 7 auszuführen.

10. Maschinenlesbares Speichermedium, umfassend Befehle, die bei der Ausführung durch einen Computer diesen veranlassen, das Verfahren nach einem der Ansprüche 1 bis 7 auszuführen.

## Claims

1. Computer-implemented method (S) for evaluating images (B1, B2) and for recognizing outliers in optical flow vectors, comprising:
- providing (S1) correspondence hypotheses ([u, v]) in a corresponding hypothesis matrix (10), wherein the correspondence hypotheses ([u, v]) represent optical flow vectors between first and second images (B1, B2) each given as a corresponding image matrix,
- evaluating (S2) the hypothesis matrix (10) and conditionally verifying (S3) the correspondence hypotheses ([u, v]),
- providing (S4) verified image correspondence hypotheses ([u, v]) as image correspondences in a correspondence matrix (100) as an evaluation result, and
- recognizing and rejecting outliers of the optical flow vectors on the basis of the verified image correspondence hypotheses ([u, v]);
wherein the process of evaluating (S2) the hypothesis matrix (10) is effected by forming (S2-1) and evaluating (S2-2) at least one histogram (63, 64) with respect to the components (u, v) of the correspondence hypotheses ([u, v]) for each element (1) of the hypothesis matrix (10) using a sliding window,
wherein the process of forming (S2-1) the at least one histogram (63, 64) for a given respective element (1) of the hypothesis matrix (10) is effected by summing or weighted summing of the respective components (u, v) of the correspondence hypotheses ([u, v]) for elements (11) within a sliding window, wherein
the sliding window is a rectangle, a polygon, an oval, an ellipse, or a circle,
wherein when evaluating (S2-2) a histogram (63, 64) for a given respective element (1) of the hypothesis matrix (10) an evaluation value is generated by reading out one or more values of the at least one histogram (63, 64) in a histogram interval pertaining to the at least one component (u, v) assigned to the given element (1), and by summing or weighted summing of said one or more values, and
wherein verifying (S3) each element (1) of the hypothesis matrix (10) involves assessing whether the evaluation value at least reaches a local or global predefined threshold value.

2. Method (S) according to Claim 1,
wherein when evaluating (S2) and in particular when forming (S2-1) histograms (63, 64), all elements (1) of the hypothesis matrix (10) are captured, in particular by respective surroundings or a respective window (20),
- which are identical for all elements (1) of the hypothesis matrix (10) in respect of shape and/or extent, or
- which are designed as sliding surroundings or as a sliding window (20).

3. Method (S) according to either of the preceding claims, wherein when evaluating (S2-2) a histogram (63, 64) for a given respective element (1) of the hypothesis matrix (10) on the basis of the histogram (63, 64) an evaluation value is generated, wherein
- one or more values from one or more histogram intervals adjacent to the assigned histogram interval or from surroundings of adjacent histogram intervals are additionally taken into account.

4. Method (S) according to any of the preceding claims,
wherein when verifying (S3) a correspondence hypothesis [(u, v)] with respect to a respectively given element (1) of the hypothesis matrix (10) or a component (u, v) thereof, an assigned and verified correspondence or a component thereof is defined in each case by an evaluation value and is preferably entered as such as a corresponding element into the correspondence matrix (100).

5. Method (S) according to any of the preceding claims,
wherein for accelerating and/or for reducing the processing complexity of the process of evaluating (S2) the hypothesis matrix (10) and/or the process of conditionally verifying (S3) the correspondence hypotheses ([u, v]), use is made of a respective currently generated histogram (63, 64), which is stored in particular in a histogram memory, for parallel and/or serial verifying of a plurality of correspondence hypotheses ([u, v]).

6. Method (S) according to Claim 5,
wherein the histogram memory is organized in such a way that an underlying clock cycle is sufficient to read out the value pertaining to a respective current element (1) of the hypothesis matrix (10) from the histogram (63, 64) and also values pertaining to one or more further intervals of the histogram (63, 64), wherein in particular (i) an underlying read address is calculated by adding or subtracting the value 1 with respect to the values stored for the current element (1) in the hypothesis matrix at (10) and/or (ii) by clustering intervals of the histogram (63, 64), in particular with respect to a dual port of the underlying histogram memory.

7. Method (S) according to any of the preceding claims,
wherein for accelerating the process of evaluating (S2) the hypothesis matrix (10) and/or the process of conditionally verifying (S3) the correspondence hypotheses ([u, v])
- the process of conditionally verifying (S3) is carried out in parallel and/or simultaneously for a plurality of correspondence hypotheses ([u, v]) pertaining to a corresponding plurality of elements (1) of the hypothesis matrix (10) and/or
- not all elements (11) of the hypothesis matrix (10) within surroundings of the respectively given element (1) and in particular the underlying sliding window (20) are taken into account when updating a histogram (63, 64), but rather at most a provided number, wherein a priority order dependent on the position in the window (20) defines the order in which the elements (11) of the hypothesis matrix (10) within surroundings of the respectively given element (1) are taken into account as a priority.

8. Device for evaluating images (B1, B2) and for evaluating correspondence hypotheses ([u, v]) of images (B1, B2),
- which is configured to carry out a method according to any of Claims 1 to 7 and
- which is designed in particular as an ASIC, as a freely programmable digital signal processing device or as a combination thereof.

9. Computer program, comprising instructions which, when the program is executed by a computer, cause said computer to execute the method (S) according to any of Claims 1 to 7.

10. Machine-readable storage medium, comprising instructions which, when executed by a computer, cause said computer to execute the method according to any of Claims 1 to 7.

## Revendications

1. Procédé mis en œuvre par ordinateur (S) pour évaluer des images (B1, B2) et reconnaître de valeurs aberrantes dans des vecteurs de flux optique, comprenant :
- fourniture (S1) d'hypothèses de correspondance ([u, v]) dans une matrice d'hypothèses (10) correspondante, les hypothèses de correspondance ([u, v]) représentant des vecteurs de flux optique entre des première et deuxième images (B1, B2) respectivement données comme matrice d'images correspondante,
- évaluation (S2) de la matrice d'hypothèses (10) et vérification (S3) conditionnelle des hypothèses de correspondance ([u, v]),
- fourniture (S4) d'hypothèses de correspondance d'image ([u, v]) vérifiées en tant que correspondances d'image dans une matrice de correspondance (100) en tant que résultat d'évaluation, et
- reconnaissance et rejet de valeurs aberrantes des vecteurs de flux optiques sur la base des hypothèses de correspondance d'image ([u, v]) vérifiées ;
l'évaluation (S2) de la matrice d'hypothèses (10) étant effectuée en formant (S2-1) et en évaluant (S2-2) au moins un histogramme (63, 64) concernant les composantes (u, v) des hypothèses de correspondance ([u, v]) pour chaque élément (1) de la matrice d'hypothèses (10) en utilisant une fenêtre glissante,
avec lequel la formation (S2-1) d'au moins un histogramme (63, 64) pour un élément (1) respectif donné de la matrice d'hypothèses (10) est effectuée par addition ou addition pondérée des composantes (u, v) respectives des hypothèses de correspondance ([u, v]) pour des éléments (11) à l'intérieur d'une fenêtre glissante,
la fenêtre glissante étant un rectangle, un polygone, un ovale, une ellipse ou un cercle,
lors de l'évaluation (S2-2) d'un histogramme (63, 64) pour un élément (1) respectif donné de la matrice d'hypothèses (10), une valeur d'évaluation étant générée par lecture puis par addition ou addition pondérée d'une ou plusieurs valeurs de l'au moins un histogramme (63, 64) dans un intervalle d'histogramme par rapport à l'au moins une composante (u, v) associée à l'élément (1) donné, et
avec lequel, lors de la vérification (S3) de chaque élément (1) de la matrice d'hypothèses (10), une évaluation est effectuée afin de vérifier si la valeur d'évaluation atteint au moins une valeur de seuil prédéfinie locale ou globale.

2. Procédé (S) selon la revendication 1,
avec lequel, lors de l'évaluation (S2) et en particulier lors de la formation (S2-1) d'histogrammes (63, 64), tous les éléments (1) de la matrice d'hypothèses (10) sont capturés, en particulier à travers un environnement respectif ou une fenêtre (20) respective,
- qui sont identiques en termes de forme et/ou d'étendue pour tous les éléments (1) de la matrice d'hypothèses (10), ou
- qui sont réalisés sous la forme d'un environnement glissant ou d'une fenêtre glissante (20).

3. Procédé (S) selon l'une des revendications précédentes, avec lequel, lors de l'évaluation (S2-2) d'un histogramme (63, 64), une valeur d'évaluation est générée pour un élément (1) respectif donné de la matrice d'hypothèses (10) sur la base de l'histogramme (63, 64),
- une ou plusieurs valeurs d'un ou plusieurs intervalles d'histogramme adjacents à l'intervalle d'histogramme associé ou issues d'un environnement d'intervalles d'histogramme adjacents étant en plus prises en compte.

4. Procédé (S) selon l'une des revendications précédentes,
avec lequel, lors de la vérification (S3) d'une hypothèse de correspondance [(u, v)] à propos d'un élément (1) respectif donné de la matrice d'hypothèses (10) ou d'une composante (u, v) de celle-ci, une correspondance associée et vérifiée ou une composante de celle-ci est respectivement fixée par une valeur d'évaluation et est de préférence introduite en tant que telle comme élément correspondant dans la matrice de correspondance (100).

5. Procédé (S) selon l'une des revendications précédentes,
avec lequel, en vue d'accélérer et/ou de réduire l'effort de traitement de l'évaluation (S2) de la matrice d'hypothèses (10) et/ou de la vérification (S3) conditionnelle des hypothèses de correspondance ([u, v]), un histogramme (63, 64) généré respectivement actuel, lequel est notamment stocké dans une mémoire d'histogrammes, est utilisé pour la vérification en parallèle et/ou en série de plusieurs hypothèses de correspondance ([u, v]).

6. Procédé (S) selon la revendication 5,
avec lequel la mémoire d'histogramme est organisée de telle sorte qu'un cycle d'horloge sous-jacent est suffisant pour lire la valeur d'un élément (1) respectivement actuel de la matrice d'hypothèses (10) à partir de l'histogramme (63, 64) ainsi que les valeurs d'un ou plusieurs autres intervalles de l'histogramme (63, 64), (i) une adresse de lecture sous-jacente étant notamment calculée en additionnant ou en soustrayant la valeur 1 par rapport à la valeur stockée en (10) pour l'élément (1) actuel dans la matrice d'hypothèses et/ou (ii) en regroupant des intervalles de l'histogramme (63, 64), notamment en ce qui concerne un port double de la mémoire d'histogramme sous-jacente.

7. Procédé (S) selon l'une des revendications précédentes,
avec lequel, afin d'accélérer l'évaluation (S2) de la matrice d'hypothèses (10) et/ou la vérification (S3) conditionnelle des hypothèses de correspondance ([u, v])
- la vérification (S3) conditionnelle est effectuée en parallèle et/ou simultanément pour une pluralité d'hypothèses de correspondance ([u, v]) pour une pluralité correspondante d'éléments (1) de la matrice d'hypothèses (10) et/ou
- tous les éléments (11) de la matrice d'hypothèses (10) situés à l'intérieur d'un environnement de l'élément (1) respectif donné et notamment de la fenêtre (20) glissante sous-jacente ne sont pas pris en compte lors de la mise à jour d'un histogramme (63, 64), mais au maximum un nombre prévu, un ordre de priorité dépendant de la position dans la fenêtre (20) définissant l'ordre dans lequel les éléments (11) de la matrice d'hypothèses (10) à l'intérieur d'un environnement de l'élément (1) donné respectif sont pris en compte avec priorité.

8. Dispositif d'évaluation d'images (B1, B2) et d'évaluation d'hypothèses de correspondance ([u, v]) d'images (B1, B2),
- lequel est conçu pour mettre en œuvre un procédé selon l'une des revendications 1 à 7, et
- lequel est notamment réalisé sous la forme d'un ASIC, d'un dispositif de traitement de signal numérique programmable ou d'une combinaison de ceux-ci.

9. Programme informatique comprenant des instructions qui, lors de l'exécution du programme par un ordinateur, amènent ce dernier à mettre en œuvre le procédé selon l'une des revendications 1 à 7.

10. Support de stockage lisible par ordinateur comprenant des instructions qui, lorsqu'elles sont exécutées par un ordinateur, amènent celui-ci à mettre en œuvre le procédé selon l'une des revendications 1 à 7.
